# EUROPEAN PATENT APPLICATION

(11) **EP 2 500 634 A1**
(43) Date of publication of application: **19.09.2012**
(21) Application number: 10829820.9
(22) Date of filing: 21.10.2010
(51) Int. Cl.: F21V 19/00, F21S 2/00, F21V 29/00, G02F 1/13357, F21Y 103/00

(54) **ILLUMINATING DEVICE, DISPLAY DEVICE, AND TELEVISION RECEIVER**

(30) Priority: 12.11.2009 JP 2009259166
(71) Applicant: Sharp Kabushiki Kaisha, Osaka-shi, Osaka 545-8522 (JP)
(72) Inventor: KUROMIZU Yasumori, OSAKA 545-8522 (JP)
(74) Representative: Müller-Boré & Partner Patentanwälte
(86) International application number: PCT/JP2010/068582
(87) International publication number: WO 2011/058860

(57) **Abstract**

Brightness is less likely to be deteriorated and a heat release property is ensured in a lighting device. A backlight unit 12 includes cold cathode tubes 18 as a light source, a chassis 14 and lamp holders 20 as a cover member. Each cold cathode tube 18 has an electrode portion 18b at its end portion 18E and the light sources 18 are housed in the chassis 14. The lamp holder 20 extends along one side (a short-side direction) of the chassis 14 and covers the end portions 18E of the cold cathode tubes 18. The lamp holder 20 includes opening portions 26 that are open toward a middle portion of the cold cathode tube 18. An opening area of the opening portion 26 is greater in one of end portions (a first end portion 20A and a second end portion 20B) of the lamp holder 20 in an extending direction of the lamp holder 20 than in a middle portion 20C of the lamp holder 20.

## Description

### TECHNICAL FIELD

The present invention relates to a lighting device, a display device and a television receiver.

### BACKGROUND ART

For example, a liquid crystal panel used for a liquid crystal display device such as a liquid crystal television does not emit light, and thus a backlight unit is required as a separate lighting device to supply illumination light to the liquid crystal panel. Such a backlight unit is disclosed in Patent Document 1 and includes a plurality of cold cathode tubes that are arranged parallel to each other and a lamp holder that covers end portions of the cold cathode tubes.

Patent Document 1: Japanese Unexamined Patent Publication No. 2006-344602

### Problem to be Solved by the Invention

The lamp holder disclosed in Patent Document 1 covers the end portions of the cold cathode tubes and hold presses the end portions from a front-surface side to hold them. In recent years, the number of cold cathode tubes is reduced to lower a cost and also the display screen is required to maintain predetermined brightness or improve brightness. Brightness of each of the cold cathode tubes is required to be improved to cope with such requirements. It is useful to reduce gas pressure in the cold cathode tubes or increase tube current to improve the brightness of the cold cathode tubes. However, this accelerates heat generation from the electrode portion that is provided at the end portion of each cold cathode tube and this tends to increase temperature of the electrode portion. Therefore, as is in Patent Document 1, if the end portions of the cold cathode tubes having the electrode portions are covered by the lamp holder, the heat generation from the electrode portion excessively increases the temperature in the lamp holder and the lamp holder may be melted.

The present inventor proposes a following configuration. An opening portion is formed in the lamp holder that opens to a middle portion of the cold cathode tube to generate air communication between the inside and outside of the lamp holder. Accordingly, heat is less likely to remain in the lamp holder. However, if the opening portion is enlarged to improve heat dissipation ability, a large amount of light from the cold cathode tube enters the opening portion. This reduces the amount of light exited to the liquid crystal panel side and this may lower brightness.

### DISCLOSURE OF THE PRESENT INVENTION

The present invention was accomplished in view of the above circumstances. It is an object of the present invention to suppress brightness from being lowered and maintain heat dissipation ability.

### Means for Solving the Problem

To solve the above problem, a lighting device of the present invention includes a light source including an electrode portion at its one end, a chassis configured to house the light source therein, and a cover member extending along a side of the chassis and configured to cover the one end portion of the light source. The cover member has opening portions open toward a middle portion of the light source. The cover member is configured such that a total opening area of the opening portions is greater in one of two end portions of the cover member in its extending direction than in a middle portion of the cover member.

Accordingly, the cover member extending along one side of the chassis covers the end portion of the light source including the electrode portion. The end portion of the light source includes the electrode potion that generates heat upon application of the voltage, and this may increase temperature of the end portion. This is more likely to occur when improved high brightness is to be achieved. According to the present invention, the cover member includes the opening portions that are open toward the middle portion of the light source. Accordingly, the air is likely to flow in and out of the cover member and heat is less likely to remain within the cover member.

In forming the opening portions in the cover member, as the opening area of each opening portion increases, the amount of flowing air increases and this improves heat release property. However, light from the light source enters the cover member via the opening portions and the increase of the opening area of the opening portion tends to lower the light use efficiency. As the opening area of each opening portion decreases, the light is less likely to enter the opening portions and this improves light use efficiency. However, the air flowing amount is reduced and this tends to deteriorate the heat release property.

According to the present invention, the total opening area of the opening portions is greater in at least one of the end portions in the elongated direction of the cover member than in the middle portion. Therefore, improved heat release property is obtained in at least one of the two end portions and sufficient heat release property is obtained in a whole lamp holder. Accordingly, heat is less likely to remain within the cover member and the cover member is less likely to be melted. The light use efficiency is improvedin the middle portion of the cover member in its elongated direction. The brightness of exit light in the middle portion of the lighting device is maintained to be high.
Compared to a case in which the light use efficiency is improved in the end portion, the lowering of brightness in a whole device is effectively suppressed. Accordingly, brightness is ensured in the middle portion of the display in the display device including the lighting device. This achieves good visibility.

Following configurations may be preferable.
(1) The cover member may be configured such that an opening area of the opening portions increases from the middle portion toward at least the one of the two end portions of the cover member. Accordingly, the heat release property and the light efficiency changes moderately from the middle portion toward at least one of the end portions in the elongated direction of the cover member. Therefore, unevenness in heat release property and brightness is less likely to occur.

(2) The cover member may include a surface facing the middle portion of the light source. The opening portions may be provided in the surface of the cover member at intervals in the extending direction of the cover member with walls remaining between the opening portions, and some of the opening portions have different opening areas. With such a configuration, the opening portions having different opening areas are formed on the surface of the cover member facing toward the middle portion of the light source, and this changes the opening area of the opening portion in the elongated direction of the cover member. Compared to a case in which only one opening portion is formed in the cover member and the opening area is changed, the strength of the cover member is kept to be high due to the remaining walls.

(3) The opening portions that are provided in adjacent to each other may have different opening areas. Accordingly, the heat release property and the brightness change moderately in the elongated direction of the cover member. This suppresses occurrence of unevenness in the heat release property and the brightness.

(4) The opening portions having different opening areas may have dimensions different in the extending direction of the cover member. Dimensions of the opening portions different in a direction perpendicular to the elongated direction of the cover member may be varied to obtain different opening areas of the opening portions. In such a case, while the light is emitted from the light source and directed toward the light exit side of the lighting device, difference in the amount of light entering each opening portion easily occurs. According to the present invention, dimensions of the opening portions different in the elongated direction of the cover member are varied to obtain different opening areas of the opening portions. Therefore, while the light is emitted from the light source and directed toward the lighting device, difference in the amount of light entering each opening portion is less likely to occur. Accordingly, high brightness is maintained.

(5) The light source may include a plurality of light sources that are arranged to be parallel to each other in the extending direction of the cover member. One of the opening portions may be formed to cover at least two adjacent light sources of the plurality of light sources. Accordingly, air flow in and out of the cover member is accelerated via the openings formed to cover the adjacent light sources. This achieves excellent heat release property.

(6) The cover member may be configured such that the total opening area of the opening portions is greater in each of the two end portions than in the middle portion. Thus, the total opening area of the opening portions is larger in each of the two end portions than in the middle portion in the elongated direction of the cover member. More improved heat release property is obtained. Also, sufficient brightness is ensured in the middle portion.

(7) The cover member may be configured such that the opening area of the opening portion increases from the middle portion toward each of the two end portions. Accordingly, the heat release property and the light use efficiency change moderately from the middle portion toward each of the end portions of the cover member. Therefore, unevenness is less likely to occur in the heat release property and brightness.

(8) The cover member may be configured such that the total opening area of the opening portions is substantially equal in each of the two end portions. Accordingly, the heat release property is substantially same in each of the two end portions in the elongated direction of the cover member and unevenness in the heat release property is less likely to occur.

(9) The cover member may be configured such that the opening portions are provided symmetrically with an axis passing through a center of an elongated side of the cover member. Accordingly, the heat release property and the light use efficiency of the cover member are exerted substantially symmetrically with respect to the axis. Thus, unevenness is less likely to occur in the heat release property and brightness. The lighting device can be used with being inverted with respect to the elongated direction of the cover member and this improves convenience.

(10) The light source may include the electrode portion at each of two ends of the light source. The cover member may be configured symmetrically with the axis passing through the center of the elongated side of the cover member. The cover member may include a pair of cover members and each of the cover members may be provided to the chassis corresponding to each of the two ends of the light source. Accordingly, the two same components of the cover members are mounted to the chassis corresponding to the end portions of the light source and this lowers a cost.

(11) The cover member may be provided such that the extending direction matches a vertical direction and the one of the two end portions of the cover member corresponds to an upper end portion in the vertical direction. In the cover member that is provided such that its extending direction matches the vertical direction, the rising air is caused due to heat generated from the end portion of the light source. The opening area of the opening portion in the upper end portion in the vertical direction is greater than the total opening area of the opening portions in the middle portion. This accelerates air flow from the inside of the cover member to outside with using the rising air. Accordingly, high heat release property is obtained.

(12) The cover member may be configured such that the opening area of the opening portion increases from the middle portion toward the upper end portion. Accordingly, the heat release property and the light use efficiency change in a moderate manner from the middle portion in the extending direction of the cover member toward the upper end portion in the vertical direction. Accordingly, unevenness is less likely to occur in the heat release property and the brightness.

(13) The cover member may be configured such that the total opening area of the opening portions is greater in the middle portion than in a lower end portion in the vertical direction. Thus, the total opening area of the opening portions in the middle portion is greater than that in the lower end portion in the vertical direction. Accordingly, air flow is accelerated by using the rising air generated in the cover member and this achieves high heat release property. The total opening area of the opening portions in the middle portion is smaller than the opening area of the opening portion in the upper end portion in the vertical direction. Therefore, brightness is sufficiently ensured.

(14) The cover member may be configured such that the opening area of the opening portion increases from the lower end portion toward the middle portion. Accordingly, the heat release property and the light use efficiency change in a moderate manner in the extending direction of the cover member from the lower end portion in the vertical direction toward the middle portion. Thus, unevenness is less likely to occur in the heat release property and the brightness.

(15) The cover member may be configured such that the opening area of the opening portion increases from the lower end portion toward the upper end portion. Accordingly, the heat release property and the light use efficiency change in a moderate manner in the extending direction of the cover member from the lower end portion toward the upper end portion in the vertical direction. Unevenness is less likely to occur in the heat release property and brightness.

(16) The cover member may be configured such that a clearance is generated between an opening edge of the opening portion and the light source. Accordingly, heat is released from the clearance between the opening edge of the opening portion and the light source. Due to the clearance, the light source is not directly in contact with the opening edge of the opening portion, and the opening edge of the opening portion is prevented from being melted by the heat generated from the light source.

(17) The cover member may include a light source pressing portion extending toward the middle portion of the light source and pressing a portion of the light source closer to the middle portion from the electrode portion. With such a configuration, the light source is pressed and held by the light source pressing portion included in the cover member. The end portion of the light source includes the electrode portion that generates heat by application of voltage. Therefore, temperature of the end portion tends to increase compared to that of the middle portion. This is likely to be caused to achieve improved brightness. The light source pressing portion of the present invention extends toward the middle portion of the light source and presses the middle portion of the light source rather than the electrode portion. The temperature of the middle portion is relatively lower than that of the end portion on which the electrode portion is provided. This prevents the light source pressing portion that presses the light source from being melted and the light source pressing portion effectively holds the light source.

(18) The light source pressing portion may include a base portion and a pressing portion. The base portion may extend from the cover member toward the middle portion of the light source and cover a part of the middle portion of the light source. The pressing portion may extend from the base portion toward the light source and come in contact with the middle portion of the light source. Accordingly, the pressing portion is projected toward the light source from the base portion that extends from the cover member toward the middle portion of the light source and covers a part of the middle portion of the light source, and the pressing portion comes in contact with the middle portion of the light source and holds the light source.

(19) The pressing portion may include a distal end portion having a contact area that is in contact with the light source and the contact area may be smaller than an area of a portion of the pressing portion that overlaps the light source. Compared to the case in which the contact area of the distal end portion of the pressing portion with the light source is equal to an area of another portion of the pressing portion overlapping the light source, light that is to be exited from the light source is less likely to be returned into the light source right after striking the distal end portion of the pressing portion. The light that is returned into the light source may be absorbed by the light source. However, the amount of light that is returned into the light source is small in the present invention. This improves light exit efficiency and brightness.

(20) The pressing portion may be formed to be tapered such that a thickness decreases toward its distal end. Compared to a case in which the pressing portion is formed to have a step to reduce the contact area of the distal end portion with the light source than an area of another portion of the pressing portion overlapping the light source, the light from the light source is less likely to be shielded by the pressing portion, and this improves use efficiency of exit light.

(21) The base portion may be provided so as to be on substantially a same plane with the opening edge of the opening portion. Accordingly, the base portion and the opening portion are easily formed in manufacturing the cover member.

(22) The base portion may be formed in substantially an umbrella shape to cover the pressing portion. Thus, the umbrella-shaped base portion covers the pressing portion and accordingly, the pressing portion is less likely to be exposed to the light exit side of the lighting device and unevenness in brightness is less likely to occur. Compared to a case in which the base portion is formed in a flat plate, the rigidity of the base portion is improved and deformation such as warping is less likely to occur and displacement is less likely to occur in the pressing portion that is in contact with the light source. Accordingly, the light source is held stably.

(23) The lighting device may further include an outer lead extending outwardly from an end of the light source and connected to the electrode portion, and a connector connected to the outer lead. According to this configuration, the light source is pressed by the light source pressing portion such that the connection between the outer lead and the connector is stably maintained. Accordingly, the light is emitted stably from the light source.

(24) The connector may include a terminal connector that comes in contact with the outer lead, and an inserting and removing direction of the outer lead with respect to the terminal connector substantially matches an arrangement direction of the light source pressing portion and the light source. Accordingly, the pressing of the light source by the light source pressing portion effectively prevents the outer lead that is in contact with the terminal connector from dropping off from the connector along the inserting and removing direction.

(25) The cover member may have light reflectivity. Accordingly, light is reflected efficiently by the surface of the cover member and this improves light use efficiency. The total opening area of the opening portions is greater in the middle portion of the cover member than in at least one end portion. Improved high brightness is maintained in the middle portion.

(26) The cover member may include an inclined portion extending toward the middle portion of the light source and inclined toward a bottom surface of the chassis. With this configuration, the light is effectively reflected by the inclined portion and directed toward the light exit side.

(27) The lighting device may further include an optical member provided to face the light source. The chassis may include an opening through which light exits and the optical member is arranged to cover the opening. The cover member may include an optical member placing portion on which the optical member is placed. Accordingly, the optical member is supported by the optical member placing portion of the cover member and a distance between the optical member and the light source is maintained to be substantially constant.

(28) The light source may be formed in a linear shape extending along an axis perpendicular to the extending direction of the cover member and the light source may include a plurality of light sources and the light sources are arranged in the chassis such that the axes are parallel to each other. The cover member may collectively cover end portions of the light sources. Thus, the end portions of the light sources are covered collectively by the cover member and this improves workability in assembling the lighting device.

(29) The light source may be a cold cathode tube. This extends life of the light source and dimming is easily carried out.

Next, to solve the above problem, a display device of the present invention may include the above lighting device and a display panel configured to provide display using light from the lighting device.

In such a display device, the lighting device that supplies light to the display panel is less likely to deteriorate brightness and the light source is surely held. This achieves display having excellent display quality.

The display panel may be a liquid crystal panel. The display device as a liquid crystal display device has a variety of applications, such as a television display or a personal-computer display. Particularly, it is suitable for a large screen display.

### Advantageous Effect of the Invention

According to the present invention, brightness is suppressed from being lowered and heat dissipation ability is ensured

### BRIEF DESCRIPTION OF THE DRAWINGS

FIG. 1 is an exploded perspective view illustrating a general configuration of a television receiver according to a first embodiment of the present invention;
FIG. 2 is an exploded perspective view illustrating a general configuration of a liquid crystal display device included in the television receiver;
FIG. 3 is a cross-sectional view illustrating a cross-sectional configuration taken along a long-side direction of the liquid crystal display device;
FIG. 4 is a plan view illustrating an arrangement configuration of cold cathode tubes, lamp holders and a chassis included in a liquid crystal display device;
FIG. 5 is a front view illustrating the lamp holder;
FIG. 6 is a cross-sectional view of the backlight unit taken along a vi-vi line in FIG. 3;
FIG. 7 is a partially enlarged cross-sectional view illustrating a cross-sectional configuration taken along the long-side direction of the liquid crystal display device;
FIG. 8 is a cross-sectional view taken along a viii-viii line in FIG. 7;
FIG. 9 is a partially cut-away perspective view illustrating a part of a light source pressing portion;
FIG. 10 is an enlarged plan view illustrating a part of an arrangement configuration of the cold cathode tube and the light source pressing portion;
FIG. 11 is a front view of the lamp holder according to a first modification of the first embodiment;
FIG. 12 is a front view of the lamp holder according to a second modification of the first embodiment;
FIG. 13 is a front view of the lamp holder according to a third modification of the first embodiment;
FIG. 14 is a front view of a lamp holder according to a second embodiment of the present invention;
FIG. 15 is a cross-sectional view illustrating a cross-sectional configuration taken along a short-side direction of the backlight unit;
FIG. 16 is a front view of the lamp holder according to a first modification of the second embodiment; and
FIG. 17 is a front view of the lamp holder according to a second modification of the second embodiment.

### BEST MODE FOR CARRYING OUT THE INVENTION

### <First Embodiment>

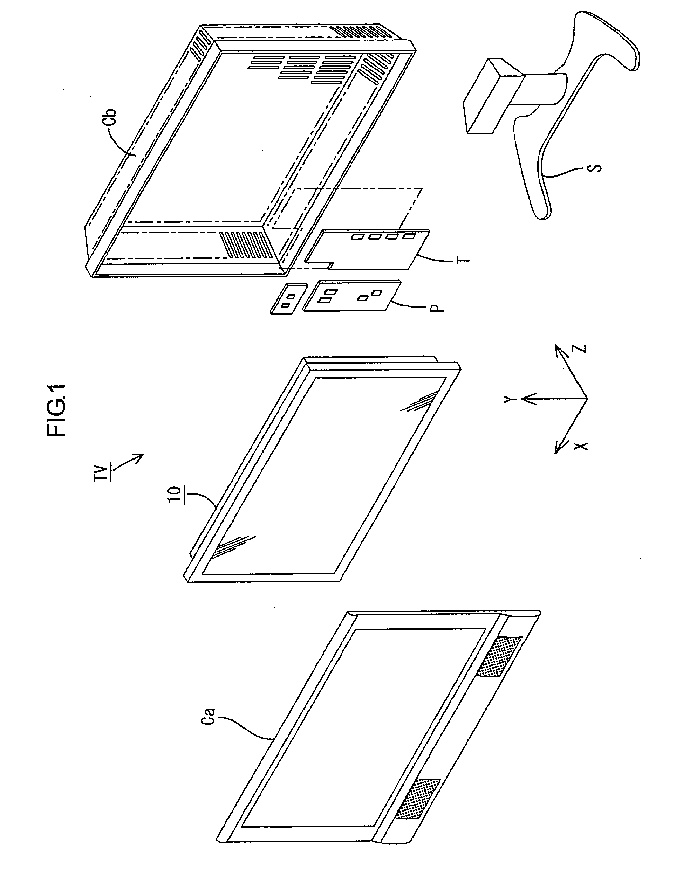

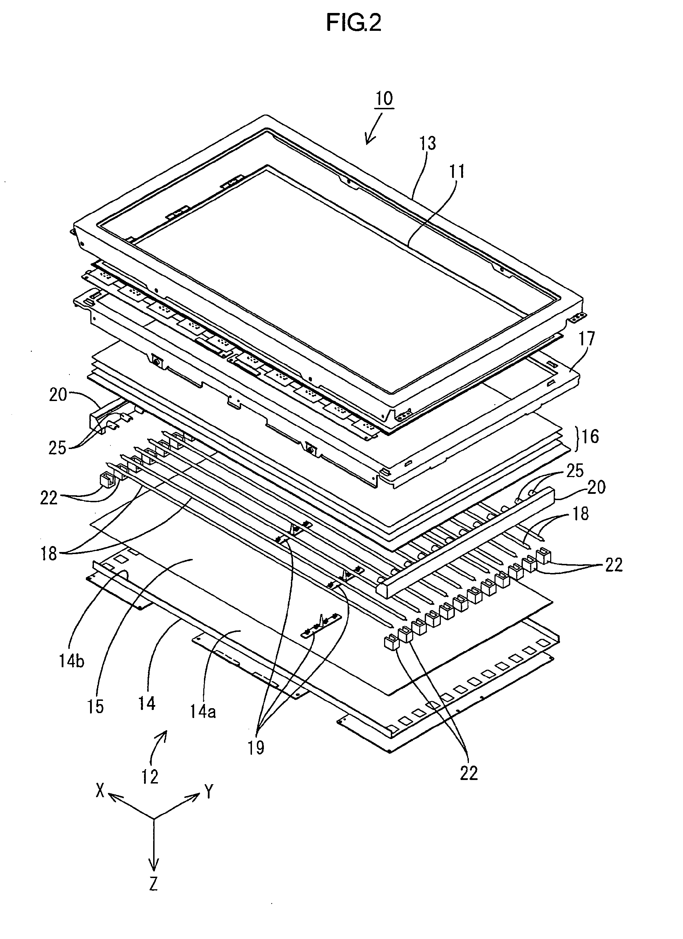

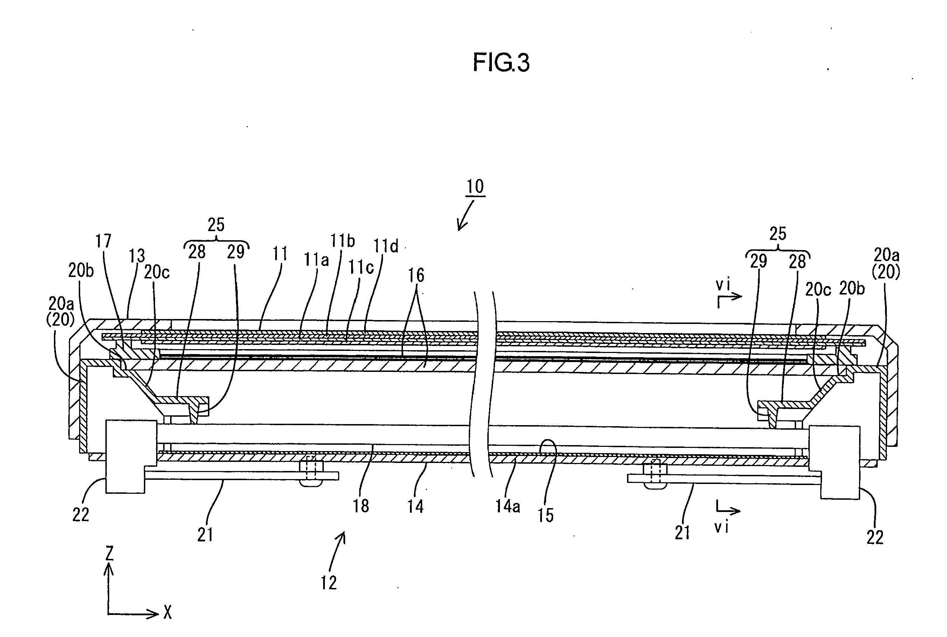

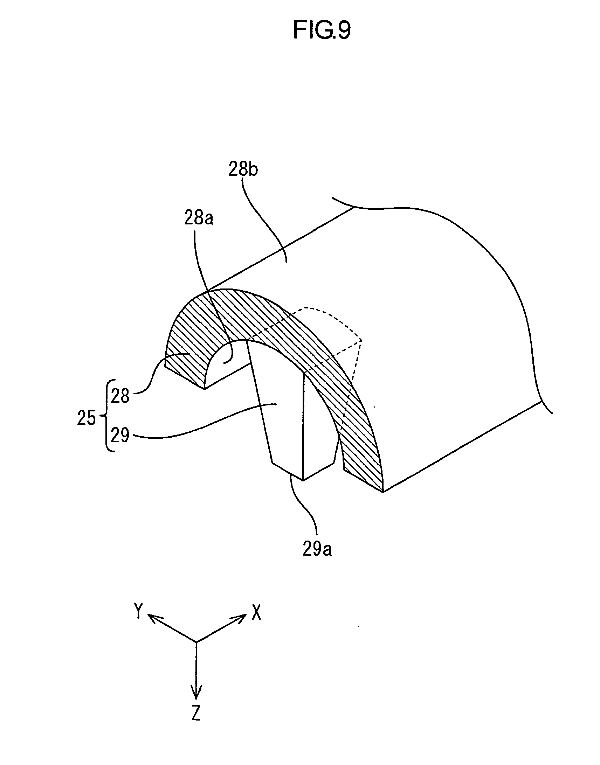

A first embodiment of the present invention will be described with reference to FIGS. 1 to 10. In the present embodiment, a liquid crystal display device 10 will be explained. An X-axis, a Y-axis and a Z-axis are described in a part of the drawings, and a direction of each axial direction corresponds to a direction described in each drawing. The Y-axis direction corresponds to a vertical direction and the X-axis direction corresponds to a horizontal direction. Basically, description regarding a upper side and a lower side is referred to with the vertical direction. An upper side in FIGS. 2 and 3 corresponds to a front-surface side and a lower side in FIGS. 2 and 3 corresponds to a rear-surface side.

As illustrated in FIG. 1, the television receiver TV of the present embodiment includes the liquid crystal display device 10, front and rear cabinets Ca, Cb which house the liquid crystal display device 10 therebetween, a power source P, a tuner T and a stand S. An entire shape of the liquid crystal display device (display device) 10 is a landscape rectangular (a rectangular shape, an elongated shape) . The liquid crystal display device 10 is housed in a vertical position. The television receiver TV is supported by the stand S that is a supporting member such that a display surface of the liquid crystal display device 10 is set along the vertical direction (the Y-axis direction).
"The display surface of the liquid crystal display device 10 is set along the vertical direction" is not limited to a condition that the display surface of the liquid crystal display device 10 is set parallel to the vertical direction. The display surface may be set along a direction closer to the vertical direction than the horizontal direction. For example, the display surface may be 0° to 45° slanted to the vertical direction, preferably 0° to 30° slanted.

As illustrated in FIG. 2, the liquid crystal display device 10 includes a liquid crystal display panel 11 that is a display panel and a backlight unit (lighting device) 12 that is an external light source. The liquid crystal panel 11 and the backlight unit 12 are integrally held by a frame shaped bezel 13 and the like. The liquid crystal panel 11 and the backlight unit 12 included in the liquid crystal display device 10 will be explained.

The liquid crystal panel 11 is formed in a rectangular shape with a plan view. As illustrated in FIG. 3, the liquid crystal panel 11 is configured such that a pair of glass substrates 11a, 11b is bonded together with a predetermined gap therebetween and liquid crystal (not illustrated) is sealed between the glass substrates 11a, 11b. On one glass substrate 11a, switching components (for example, TFTs) connected to source lines and gate lines which are perpendicular to each other, pixel electrodes connected to the switching components, and an alignment film and the like are provided. On the other substrate 11b, color filters having color sections such as R (red), G (green) and B (blue) color sections arranged in a predetermined pattern, counter electrodes, and an alignment film and the like are provided. Image data and various control signals that are necessary to display images are transmitted from a drive circuit board (not illustrated) to the source lines, the gate lines and the counter electrodes. Polarizing plates 11c, 11d are attached to outer surfaces of the substrates 11a, 11b.

As illustrated in FIGS. 2 and 3, the backlight unit 12 is a so-called direct type backlight unit in which the light source is arranged directly below the rear surface of the liquid crystal panel 11. The backlight unit 12 includes a chassis 14, an optical sheet 15, a plurality of optical members 16, a frame 17, a plurality of cold cathode tubes 18 (light source), lamp clips 19 and lamp holders 20. The chassis 14 has a substantially box-shape and has an opening on the front-surface side (on a light exit side, on the liquid crystal panel 11 side). The reflection sheet 15 is provided in the chassis 14. The optical members 16 are arranged to cover a chassis opening 14b of the chassis 14. The frame 17 holds the optical members 16. The cold cathode tubes 18 are housed in the chassis 14 so as to be arranged to be parallel to each other. The lamp clip 19 holds a middle portion of the cold cathode tube 18. The lamp holder 20 has light reflectivity and shields the end portions of the cold cathode tubes 18 from light. The backlight unit 12 further includes an inverter board 21 (a power source circuit board) and connectors 22. The inverter board 21 is provided on a rear-surface side of the chassis 14. Each of the connectors 22 electrically connects the inverter board 21 and each cold cathode tube 18.

The chassis 14 is made of metal such as aluminum. The chassis 14 includes a rectangular bottom plate 14a like the liquid crystal panel 11, and side plates 14c each of which rises from an outer edge of the corresponding side of the bottom plate 14a. A long side of the chassis 14 matches an X-axis direction in the drawings and a short side thereof matches a Y-axis direction in the drawings. The bottom plate 14a is arranged to face a rear side of the cold cathode tubes 18. That is, the bottom plate 14a is arranged on a side opposite to the light exit side with respect to the cold cathode tubes 18. The reflection sheet 15 is made of white synthetic resin having good light reflectivity and is provided on the bottom plate 14a of the chassis 14 so as to cover almost entire area of an inner surface of the bottom plate 14a. The reflection sheet 15 reflects light from the cold cathode tubes 18 to the optical member 16 side (the light exit side).

The optical member 16 is formed in a rectangular landscape with a plan view like the bottom plate 14a of the chassis 14 and the liquid crystal panel 11. The optical member 16 is made of translucent synthetic resin and provided between the cold cathode tubes 18 and the liquid crystal panel 11. The optical member 16 includes a diffuser, a diffuser sheet, a lens sheet and brightness improving sheet and the like in this order from a rear-surface side. The optical member 16 converts light from each cold cathode tube 18 that is a linear light source into uniform planer light.

The frame 17 is formed in a frame shape along an outer peripheral part of the liquid crystal panel 11 and the optical member 16. The frame 17 is provided on the front-surface side of the optical member 16. The outer peripheral part of the optical member 16 is held between the frame 17 and a side plate of the chassis 14 and between the frame 17 and the lamp holder 20. The frame 17 receives a rear surface of the liquid crystal panel 11 and the frame 17 and the bezel 13 that is provided on the front-surface side of the liquid crystal panel 11 hold the liquid crystal panel 11 therebetween.

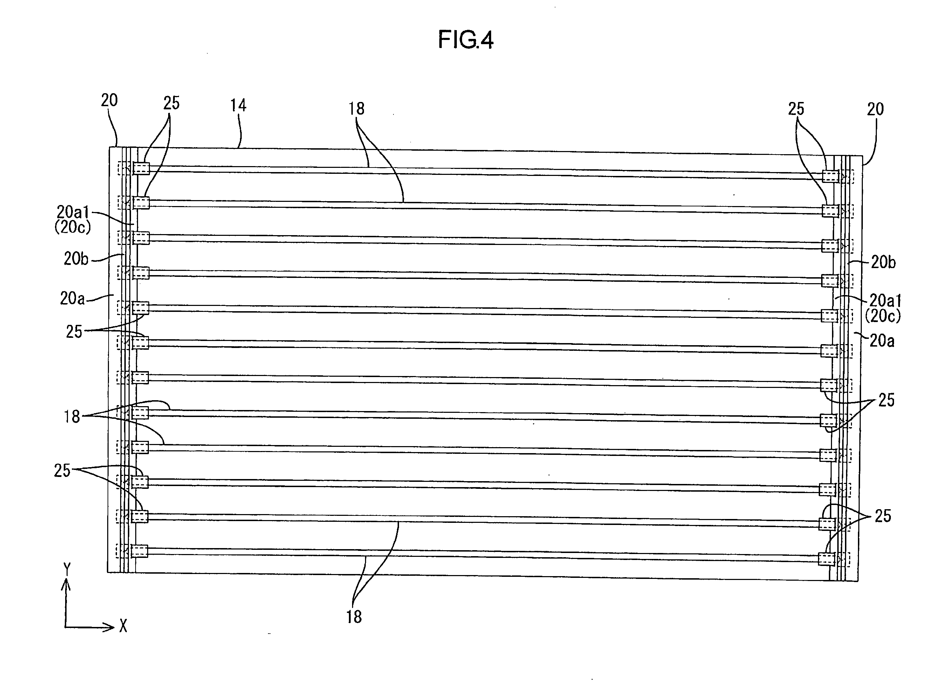

The cold cathode tubes 18 are linear light sources (tubular light sources). As illustrated in FIG. 4, the cold cathode tubes 18 are arranged in the chassis 14 such that axial lines of the cold cathode tubes 18 match the long side (the X-axis direction) of the chassis 14. The cold cathode tubes 18 are arranged such that the axial lines thereof are substantially parallel to each other and arranged along the short side (the Y-axis direction) of the chassis 14 to be parallel to each other having a predetermined distance between the adjacent cold cathode tubes 18. Accordingly, two end portions 18E of each cold cathode tube 18 are arranged along the short-side of the chassis 14 at the two end portions of the chassis 14 in the long-side direction, respectively. Intervals between the adjacent cold cathode tubes 18 that are arrangement intervals are substantially equal to each other.

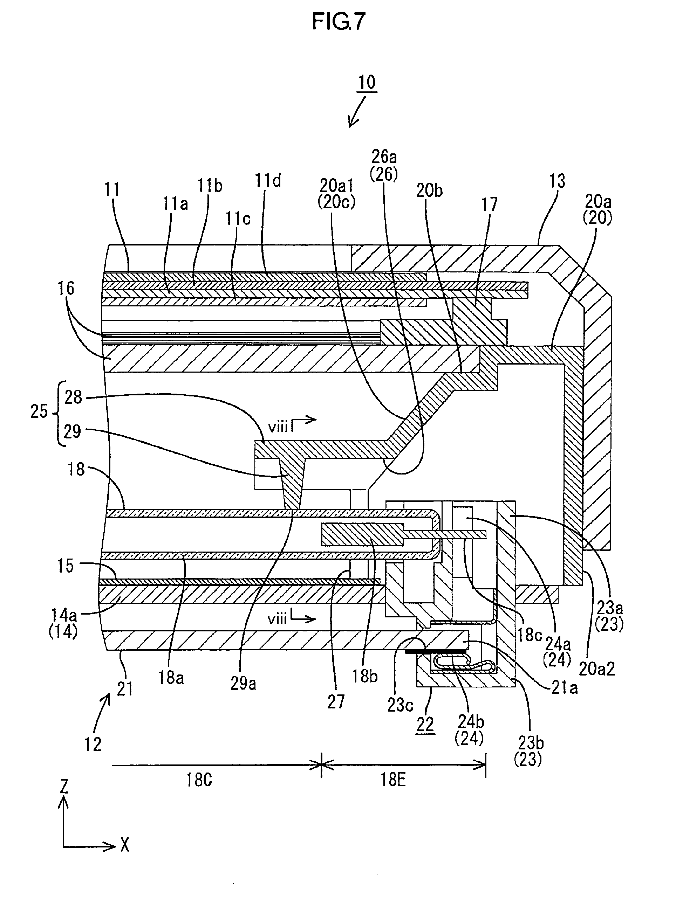

The cold cathode tube 18 is one kind of discharge tubes. As illustrated in FIG. 7, the cold cathode tube 18 includes a thin elongated glass tube 18a, a pair of electrode portions 18b, and a pair of outer leads 18c. The glass tube 18a has a circular cross section and two end portions of the glass tube 18a are sealed. The pair of electrode portions 18b are enclosed in the glass tube at the two end portions. The outer leads 18c extend outwardly from the two end portions of the glass tube 18a, respectively. The cold cathode tube 18 is a so-called straight tube type in which the glass tube 18a is formed in a straight linear shape and the electrode portion 18b is arranged at two different sides (the right side and the left side in FIGS. 3 and 4). The glass tube 18a may contain mercury that is a light emitting material, and their inner wall surfaces are coated with a fluorescent material. The mercury and the fluorescent material are not illustrated. The electrode portions 18b and the outer leads 18c are made of conductive metal material and the electrode portions 18b are preferably made of alloy that is excellent in anti-spattering property. The electrode portion 18b is formed in substantially a thin elongated cup shape along the axial direction (the X-axis direction, the longitudinal direction) of the glass tube 18a and the electrode portion 18b is housed in the end portion of the glass tube 18a. The outer lead 18c is formed in substantially an elongated column so as to penetrate through the sealed end and extend outwardly along the axial direction of the glass tube 18a. An inner end portion of the outer lead 18c is connected to the electrode portion 18b in the glass tube 18a such that the outer lead 18c is at a same potential as the electrode portion 18b.

In the present embodiment, the cold cathode tube 18 is divided to a middle side portion 18C and a pair of end portions 18E by an end position (an end position close to the middle portion) of the electrode portion 18b on a side opposite from the outer lead 18c side. The middle side portion 18C is closer to the middle portion of the cold cathode tube 18 than the electrode portion 18b and the end portion is closer to the end of the cold cathode tube 18 than the middle side portion 18C. The middle side portion 18C is a stable light emission portion in which brightness is stably constant. Each of the end portions 18E is an unstable light emission portion in which brightness is lower than the middle side portion 18C or brightness is uneven. The brightness is unstable in the end portions 18E because the electrode portions 18b arranged in the end portions 18E are recognized as dark points from outside. A border between the middle side portion 18C and each of the end portions 18E of the cold cathode tube 18 is closer to the middle portion of the cold cathode tube 18 than the lamp holder 20. That is, the electrode portion 18b is partially projected from the lamp holder 20 toward the middle portion side of the cold cathode tube 18.

Each of the lamp clips 19 is made of white synthetic resin having excellent light reflectivity. The lamp clips 19 are arranged evenly on an inner surface of the bottom platel4a of the chassis with a predetermined distribution. Each of the lamp clips 19 is fixed to the bottom plate 14a of the chassis 14 and holds the middle portion 18C of the cold cathode tube 18 excluding the end portions 18E. Accordingly, a distance between each cold cathode tube 18a and the bottom plate 14a of the chassis 14 is maintained to be constant.

The lamp holder 20 is made of white synthetic resin having excellent light reflectivity. As illustrated in FIGS. 2 and 4, the lamp holder 20 extends along the short-side direction of the chassis 14 (Y-axis direction) and includes a main body 20a that is formed in substantially a box shape being open on a rear-surface side. The lamp holder 20 is provided on two ends of the chassis 14 in its long-side direction and each lamp holder 20 covers collectively the end portions 18C (unstable light emission portion) of the cold cathode tubes 18 that are arranged in parallel to each other. As illustrated in FIG. 3, a step is formed on a front-side surface of the main body 20a of the lamp holder 20 and the step is used as an optical member placing portion 20b on which the optical member 16 is placed. The main body 20a of the lamp holder 20 has an inclined portion 20c that extends from the optical member placing portion 20b toward the bottom plate 14a with being inclined. A detailed configuration of the lamp holder 20 will be explained later.

The inverter board 21 is configured by a base board made of synthetic resin (such as paper phenol or glass epoxy resin) on which a predetermined circuit pattern is formed and various electronic parts are mounted. The circuit pattern and the electronic parts are not illustrated in the drawings. The inverter board 21 is connected to a power source P of the liquid crystal display device 10. The inverter board 21 increases input voltage input from the power source P and outputs output voltage that is higher than the input voltage to the cold cathode tube 18 to control turning on and off of the cold cathode tube 18. As illustrated in FIG. 3, the inverter board 21 is attached to a rear surface of the bottom plate 14a of the chassis (a surface opposite to the one on which the cold cathode tubes 18 are arranged). The inverter board 21 is attached to each end of the rear surface in the long-side direction via screws. A connector connecting portion 21a is formed on the end of the inverter board 21. The connector connecting portion 21a is fitted to and connected to a connector 22.

As illustrated in FIGS. 3 and 4, a pair of connectors 22 is provided in the chassis 14 corresponding to the two end portions of each cold cathode tube 18 or corresponding to the two end positions of the bottom plate 14a in its long-side direction. A plurality pairs of connectors 22 are provided in the short-side direction of the bottom plate 14a (in the Y-axis direction, in the arrangement direction of the cold cathode tubes 18). The number of pairs of connectors 22 is equal to the number of cold cathode tubes 18. An arrangement interval between the adjacent connectors 22 is substantially equal to the arrangement interval between the adjacent cold cathode tubes 18. The arrangement position of each connector 22 in the Y-axis direction substantially corresponds to the position of each cold cathode tube 18.

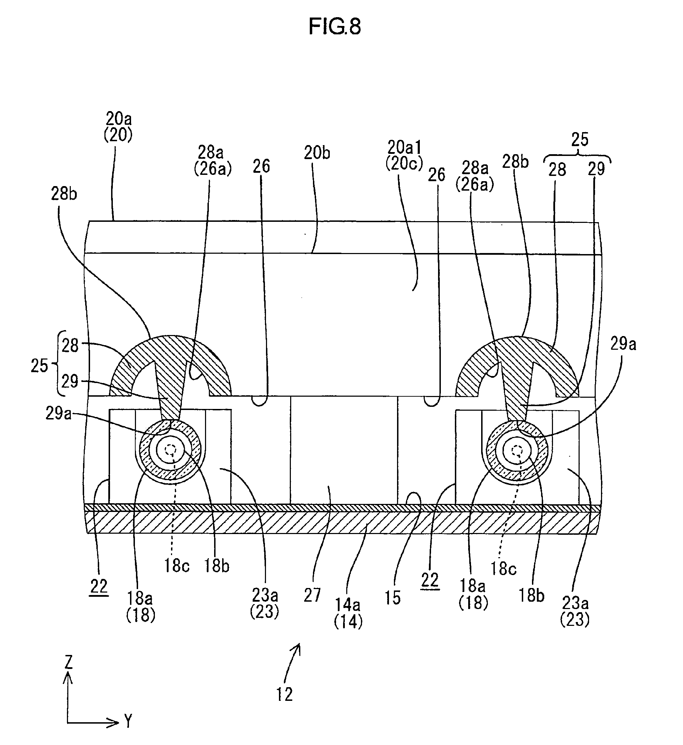

As illustrated in FIG. 7, the connector 22 includes a housing 23 and a terminal connector 24 and is mounted in the chassis 14 so as to penetrate the bottom plate 14a. The housing 23 is formed of insulating synthetic resin and formed in substantially a block shape as a whole. The terminal connector 24 is housed in the housing 23. A portion of the housing 23 that is located in the chassis 14 corresponds to a light source receiving portion 23a that receives an end portion of the cold cathode tube 18. A portion of the housing 23 that is located outside the chassis 14 corresponds to a board receiving portion 23b that receives a connector connecting portion 21a of the inverter board 21. An arc groove is formed in the light source receiving portion 23a so as to follow the end portion of the cold cathode tube 18 (FIG. 8). A board insertion opening 23c is formed in the board receiving portion 23b. The board insertion opening 23c is open toward the inverter board 20 along the X-axis direction. An end portion of the terminal connector 24 that is provided in the light source receiving portion 23a corresponds to a light source connecting portion 24a that is connected to the outer lead 18c of the cold cathode tube 18. An end portion of the terminal connector 24 that is provided in the board receiving portion 23b corresponds to a board connecting portion 24b that is connected to the connector connecting portion 20a. Each of the light source connecting portion 24a and the board connecting portion 24b has elasticity and is elastically connected to the outer lead 18c and the connector connecting portion 20a. A pair of light source connecting portions 24a is provided and two light source connecting portions 24a are provided to face each other in the Y-axis direction. The two light source connecting portions 24a elastically sandwich and hold the outer lead 18c therebetween. A direction of inserting and removing of the outer lead 18c with respect to the light source connecting portion 24a substantially matches the Z-axis direction. A direction of inserting and removing of the connector connecting portion 20a with respect to the board connecting portion 24b substantially matches the X-axis direction. Voltage output from the inverter board 21 is input to the outer lead 18c and the electrode portion 18b of the cold cathode tube 18 via the connector 22.

The lamp holder 20 covers the end portion 18E of the cold cathode tube 18 on which the electrode portion 18b is provided. The electrode portion 18b that is provided in the end portion 18E of the cold cathode tube 18 generates heat according to the application of driving voltage when the cold cathode tube 18 is lit on. Especially, if the tube current flowing through the cold cathode tube is increased or gas pressure within the cold cathode tube 18 is lowered to improve brightness of the cold cathode tube 18, heat generation fro the electrode portion 18b tends to be accelerated. Accordingly, heat generated from the end portion 18E of the cold cathode tube 18 excessively increases the temperature within the lamp holder 20 and this may melt the lamp holder 20. The lamp holder 20 has an opening 26 that is open toward a middle portion of the cold cathode tube 18 to release heat therefrom. A configuration of the opening 26 and a configuration of the main body 20a of the lamp holder 20 will be explained in detail.

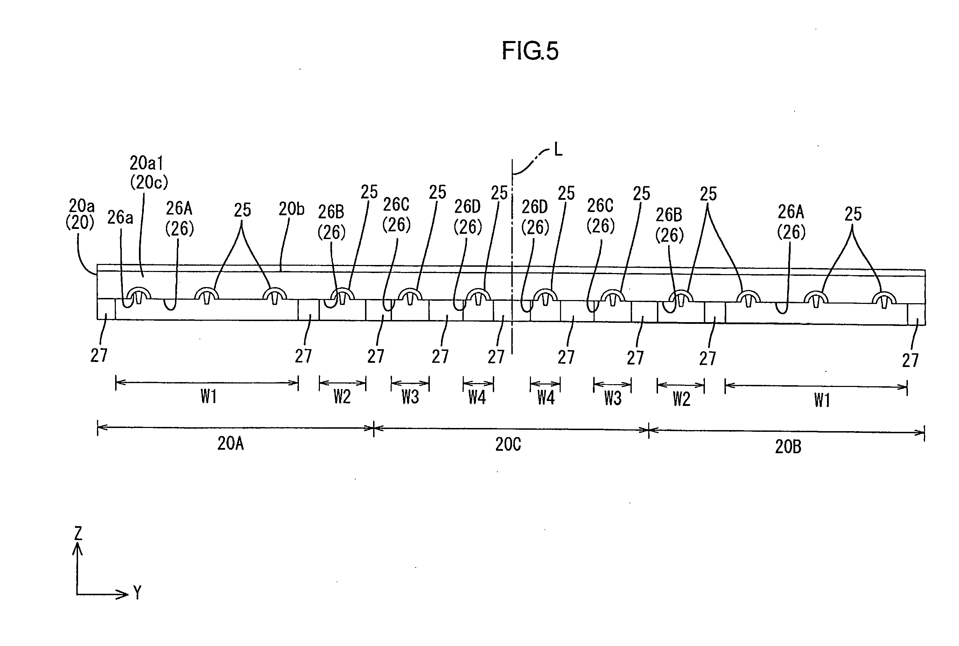

The configuration of the main body 20a will be explained in detail. As illustrated in FIGS. 4 and 5, the main body 20a has a length dimension that is substantially equal to a short-side dimension of the chassis 14 and has a pair of side walls 20a1, 20a2 extending in a length direction of the main body 20a (Y-axis direction). As illustrated in FIG. 7, the side wall 20a1 that is located on an inner side or close to the middle portion of the cold cathode tube 18 includes the optical member placing portion 20b and the inclined portion 20c. The side wall 20a2 that is located on outer side is formed in a vertical wall substantially straight over an entire length along the Z-axis direction. The opening 26 is formed in the inner side wall 20a1. The cold cathode tube 18 is inserted through the opening 26 and air flows in and out of the main body 20a through the opening 26. The opening 26 is formed by cutting out a rear side portion of the side wall 20a1 corresponding to a predetermined area so as to leave a front side portion including the optical member placing portion 20b and the inclined portion 20c. The opening portion 26 is open toward the inner side (toward the middle portion of the cold cathode tube 18) and the rear side (toward the bottom plate 14a of the chassis 14). A plurality of openings 26 are intermittently provided at intervals along the Y-axis direction that is the extending direction of the main body 20a so as to be parallel to each other. A rear-side portion of the side wall 20a1 remains as a support wall 27 that supports the main body 20a with respect to the bottom plate 14a of the chassis 14. Heat within the main body 20a is released to outside through the opening 26 and accordingly heat is less likely to remain within the main body 20a.

To improve the heat release property of the lamp holder 20, it is necessary to increase an amount of air flowing into and out of the lamp holder 20. Therefore, it is effective to increase an opening area of the opening portion 26. The increase of the opening area of the opening portion 26 improves heat dissipation efficiency. However, as a result of the increase of the opening area of the opening portion 26, light from the cold cathode tube 18 easily enters into the main body 20a through the opening portion 26. This may decrease an amount of light directed toward the optical member 16 and deteriorate light utility efficiency. The increase of the opening area of the opening portion 26 may decrease the amount of exit light of the backlight unit 12 and deteriorate brightness of the backlight unit 12.

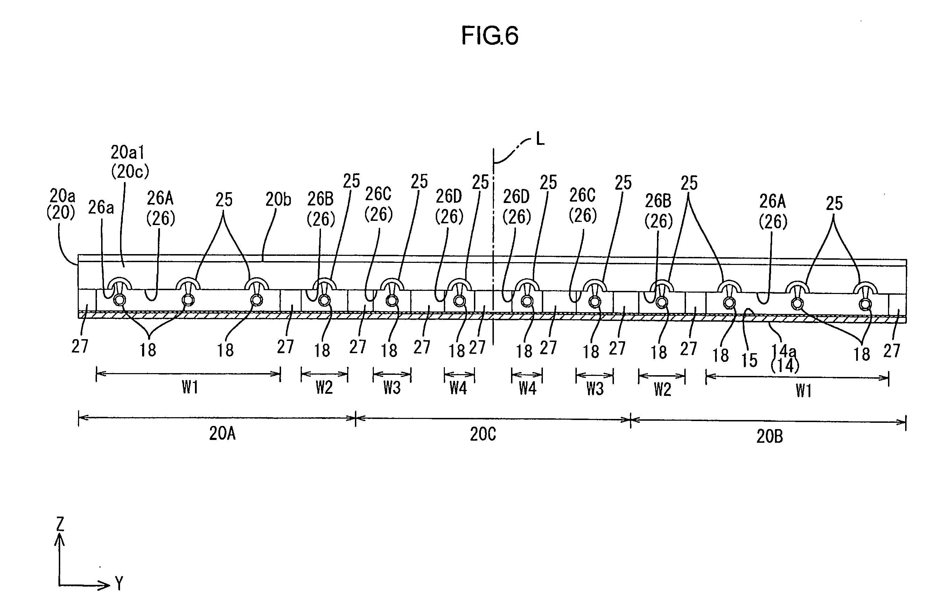

According to the present embodiment, as illustrated in FIGS. 5 and 6, the total opening area of the opening portions 26 of the side wall 20a1 of the main body 20a is set differently in two end portions 20A, 20B and in a middle portion 20C f the lamp holder 20 in its extending direction (the Y-axis direction). Specifically, the total opening area of the opening portions 26 is relatively small in the middle portion 20c and relatively large in each of the end portions 20A, 20B. The opening area of each opening portion 26 will be explained in detail. The lamp holder 20 of the present embodiment is divided in its extending direction equally into three portions including the first end portion 20A, the second end portion 20B and the middle portion 20C. The second end portion 20B is provided at an end opposite form the first end portion 20A and the middle portion 20C is sandwiched between the first end portion 20A and the second end portion 20B. Each of the first end portion 20A, the second end portion 20B and the middle portion 20C has an equal length dimension along the extending direction of the lamp holder 20. The first end portion 20A corresponds to an upper end portion in the vertical direction and the second end portion 20B corresponds to a lower end portion in the vertical direction.

The opening portions 26 and the support walls 27 are alternately provided in the inner side wall 20a1 of the main body 20a along the Y-axis direction. Specifically, eight opening portions 26 and nine support walls 27 are alternately provided. Each of the opening portions 26 are symmetrically provided with respect to an axis L passing through a center of the lamp holder 20 in the Y-axis direction. Accordingly, the lamp holder 20 is symmetrically configured with respect to the axis L. For easy explanation, the opening portions 26 include a first opening portion 26A, a second opening portion 26B, a third opening portion 26C and a fourth opening portion 26D from an end toward the middle portion (the axis L) of the lamp holder in its extending direction. The lamp holder 20 includes two sets of the opening portions 26A-26D. When each opening portion 26 is identified, "A" is added to the symbol representing the first opening portion and "B" is added to the symbol representing the second opening portion and "C" is added to the symbol representing the third opening portion and "D" is added to the symbol representing the fourth opening portion. In generally referring the opening portion, no additional character is applied to the symbol.

Each opening portion 26 has a height dimension (a dimension in the Z-axis direction) and a width dimension (a dimension in the Y-axis direction (extending direction)) that are greater than an outer diameter dimension of the cold cathode tube 18. Each opening portion 26 has a same height dimension and has a different width dimension. Therefore, the opening area of each opening portion 26 depends on its width dimension and changes according to the change in its width dimension. If the width dimension of the opening portion 26 increases, the opening area of the opening portion 26 also increases, and if the width dimension of the opening portion 26 decreases, the opening area of the opening portion decreases. The width dimension of each opening portion 26, that is the opening area, increases as is closer to the two end sides of the lamp holder 20 from the middle portion in the elongated direction of the lamp holder 20 (as is farther away from the center axis L), and the width dimension of each opening portion 26 gradually decreases as is closer to the middle portion from the two end sides.

Specifically, the second opening portion 26B, the third opening portion 26C and the fourth opening portion 26D have the width dimensions W2-W4, respectively. Each of the width dimensions W2-W4 is wide enough for covering one cold cathode tube 18, however, each of the width dimensions W2-W4 does not cover two cold cathode tubes 18. Each of the width dimensions W2-W4 has a different dimension. The width dimensions W2-W4 of the opening portions 26B-26D increase from the width dimension W4 of the fourth opening portion 26D, the width dimension W3 of the third opening portion 26C and the width dimension W2 of the second opening portion 26B in this order. The width dimension W4 of the fourth opening portion 26D that is located closest to the middle portion among the opening portions 26A-26D (closest to the axis L) is minimum. Difference between the width dimensions W2-W4 of the opening portions 26B-26D is slight and is smaller than the difference between each width dimension W2-W4 and the outer diameter dimension of the cold cathode tube 18. The first opening portion 26A that is located closest to the end (farthest from the axis L) has the width dimension W1 that is wide enough for covering three cold cathode tubes 18. The width dimension W1 of the first opening portion 26A is greater than either of the width dimensions W2-W4 of other opening portions 26B-26D and is maximum. The width dimension W1 of the first opening portion 26A is greater than the dimension obtained by adding the total dimension of all the width dimensions W2-W4 of other opening portions 26B-26D and the width dimensions of the support wall 27 between the second opening portion 26B and the third opening portion 26C and the support wall 27 between the third opening portion 26C and the fourth opening portion 26D. The width dimension W1 of the first opening portion 26A is greater than the dimension obtained by doubling the total dimension of the width dimensions W3 and W4 of the third opening portion 26C and the fourth opening 26D. Accordingly, the difference between the width dimension W1 of the first opening portion 26A and each of the width dimension W2-W4 of other opening portions 26B-26D is extremely great compared to the difference between the width dimensions W2-W4 of the opening portions 26B-26D. Each opening portion 26A-26D has an opening edge (an opening side edge) along the Z-axis direction. A distance (an interval) from the opening edge of each opening portion 26A-26D to the cold cathode tube 18 is different from each other. The distance is maximum in the first opening portion 26A and minimum in the fourth opening portion 26D (FIG. 6).

The width dimension of each support wall 27 that is adjacent to each opening portion 26A-26D is different according to the width dimension W1-W4 of each opening portion 26A-26D. The width dimension of the support wall 27 decreases gradually as is closer to the two ends from the middle portion of the lamp holder 20 in its elongated direction and increases gradually as is closer to the middle portion from the two ends of the lamp holder 20. The width dimension of the support wall 27, that is a surface area of the support wall 27, is smaller as the width dimension (the opening area) of the adjacent opening portion 26 is greater and the width dimension of the support wall 27 is greater as the width dimension of the adj acent opening portion 26 is smaller. Therefore, the width dimension (the surface area) of the support wall 27 that is located closest to the end (that is located in adjacent to the first opening portion 26A having a maximum width dimension and closer to the end side) is minimum, and the width dimension of the support wall 27 that is located in the middle portion (that is located between the fourth opening portions 26D having a minimum width dimension and overlapping the axis L) is maximum.

Each of the first end portion 20A and the second end portion 20B of the lamp holder 20 includes the first opening portion 26A and the second opening portion 26B. The middle portion 20C of the lamp holder 20 includes two third opening portions 26C and two fourth opening portions 26D. A border between the first end portion 20A and the middle portion 20C and a border between the second end portion 20B and the middle portion 20C correspond to substantially a middle portion of the support wall 27 disposed between the second opening portion 26B and the third opening portion 26C. Each of the first end portion 20A and the second end portion 20B includes a smaller number of opening portions 26 compared to the middle portion 20C. However, each of the first end portion 20A and the second end portion 20B includes the first opening portion 26A having the maximum opening area and the second opening portion 26B having the second largest opening area, and therefore the total opening area is greater in each of the first end portion 20A and the second end portion 20B than the middle portion 20C. It is apparent from that the width dimension W1 of the first opening 26A included in each of the first end portion 20A and the second end portion 20B is greater than the dimension obtained by doubling the total dimension of the width dimensions W3 and W4 of the third opening portion 26C and the fourth opening portion 26D included in the middle portion 20C. Therefore, compared to the middle portion 20C, the amount of air flowing into and from the main body 20a is relatively greater in each of the first end portion 20A and the second end portion 20B and this achieves improved heat release property. The total opening area of the opening portions 26 in each of the first end portion 20A and the second end portion 20B is equal to each other and this achieves substantially same heat release property.

The middle portion 20C has a total opening area relatively smaller than the end portions 20A and 20B and has a relatively greater total surface area of the support walls 27. The middle portion 20 includes a greater number of opening portions 26 than the end portions 20A, 20B and accordingly includes a greater number of support walls 27 each of which defines the adjacent opening portions 26. Therefore, compared to the end portions 20A, 20B, the total opening area of the opening portions 26 is smaller and the total surface area of the support walls is larger. The total opening area of the opening portions 26 is relatively small and accordingly, the amount of light entering into the main body 20a through the opening portions 26 is small in the middle portion 20C. The total surface area of the support walls 27 is relatively large and accordingly, the amount of light reflecting off the surface of the support walls 27 is great in the middle portion 20C. Therefore, a greater amount of light from the cold cathode tubes 18 is directed toward the front side, that is to the light exit side (toward the optical member 16), in the middle portion 20C. This improves light use efficiency and brightness.

Each opening portion 26 has an opening edge along the Y-axis direction (an opening upper edge). A portion of the opening upper edge corresponding to the cold cathode tube 18 is formed to be recessed in an arc shape so as to follow an outer shape of the cold cathode tube 18 and a recess 26a is formed (FIGS. 7 and 8). A clearance is ensured between the recess 26a and the cold cathode tube 18. This clearance allows air to flowing into and from the main body 20a and prevents the opening edge from directly contacting the cold cathode tube 18. However, due to the clearance, the end portions of the cold cathode tubes 18 cannot be pressed from the front side by the main body 20a. The outer lead 18c of the cold cathode tube 18 comes in contact with the terminal connector 24 of the connector 22 to establish electric connection. The cold cathode tube 18 is required to be held in the connector 22 so as not to be dropped off from the connector 22 in the Z-axis direction to achieve stable connected state. If the light is on, leak current flows from the cold cathode tubes 18 to the bottom plate 14a of the chassis 14. It is preferable to keep constant positional relation between the cold cathode tube 18 and the bottom plate 14a of the chassis 14 in the Z-axis direction to obtain stable leak current. To achieve such configuration, the cold cathode tubes 18 are required to be held in a constant position in the Z-axis direction.

As illustrated in FIG. 7, the lamp holder 20 of the present embodiment includes a light source pressing portion 25 that projects toward the middle portion of the cold cathode tube 18 and presses the cold cathode tube 18 from the front side. The light source pressing portion 25 is configured to press the middle portion 18C of the cold cathode tube 18 that is closer to the middle portion from the electrode portion 18b. The middle portion 18C of the cold cathode tube 18 has relatively lower temperature compared to the end portion 18E in which the electrode portion 18b is provided. Therefore, the light source pressing portion 25 that presses the middle portion 18C is not melted. A configuration of the light source pressing portion 25 will be explained in detail. In the present embodiment, each of the opening portions 26 has a same height dimension and a clearance between each recess 26a and the cold cathode tube 18 is equal to each other, and therefore all the light source pressing portions 25 are formed in a same shape.

The light source pressing portion 25is integrally formed with the inner side wall 20a1 of the main body 20a of the lamp holder 20. As illustrated in FIGS. 7 and 8, the light source pressing portion 25 includes a base portion 28 and a pressing portion 29. The base portion 28 is projected from the side wall 20a1 of the main body 20a toward the middle portion of the cold cathode tube 18 along the X-axis direction and the base portion 28 covers a part of the middle portion 18C of the cold cathode tube 18. The pressing portion 29 projects from the base portion 28 toward the cold cathode tube 18 along the Z-axis direction and comes in contact with the middle portion 18C of the cold cathode tube 18.

A cross-sectional shape of the base portion 28 taken along a direction (the Y-axis direction that is a width direction and the Z-axis direction that is a thickness direction) that is perpendicular to its projecting direction from the side wall 20a1 (X-axis direction) is substantially an arc curved shape like the recess 26a. An arc-shaped inner surface 28a of the base portion 28 that faces the rear side (a surface facing the cold cathode tube 18) and an arc-shaped outer surface 28b of the base portion 28 that faces the front side (a surface opposite from the surface facing the cold cathode tube 18 or a surface facing the optical member 16) are formed to follow an outer shape of the cold cathode tube 18. Therefore, a thickness dimension of the base portion 28 is substantially constant in its entire width. The inner surface 28a of the base portion 28 is on a same plane as a surface of the recess 26a of the opening portion 26. A distance from the cold cathode tube 18 to the inner surface 28a of the base portion 28 is substantially constant in an entire width. A distal end of the base portion 28 projected from the side wall 20a1 is located to be closer to the middle portion of the cold cathode tube 18 than the electrode portion 18b and the pressing portion 29. The base portion 28 has a width dimension greater than the pressing portion 29. The width dimension of the base portion 28 corresponds to a dimension in the Y-axis direction (a direction perpendicular to the direction in which the base portion 23 projects from the lamp holder 20 and also perpendicular to the direction in which the pressing portion 29 projects). The base portion 28 is formed in substantially an umbrella shape so as to cover the pressing portion 29. The base portion 28 having such a shape covers the pressing portion 29 from the front side, and the pressing portion 29 is less likely to be recognized as a dark point. The width dimension of the base portion 28 is greater than the width dimension of the electrode portion 18b and an outer diameter dimension of the cold cathode tube 18. Therefore, the base portion 28 overlaps an entire area of the cold cathode tube 18 including the electrode portion 18b in the Y-axis direction in a plan view. Such a base portion 28 covers a portion of the end portion 18E of the cold cathode tube 18 that projects from the main body 20a (the support wall 27) of the lamp holder 20 toward the middle portion and the portion of the end portion 18E is not seen from the front side. Therefore, an entire area of the end portion 18E (including the electrode portion 18b) that is the unstable light emission portion is not exposed to the front side.

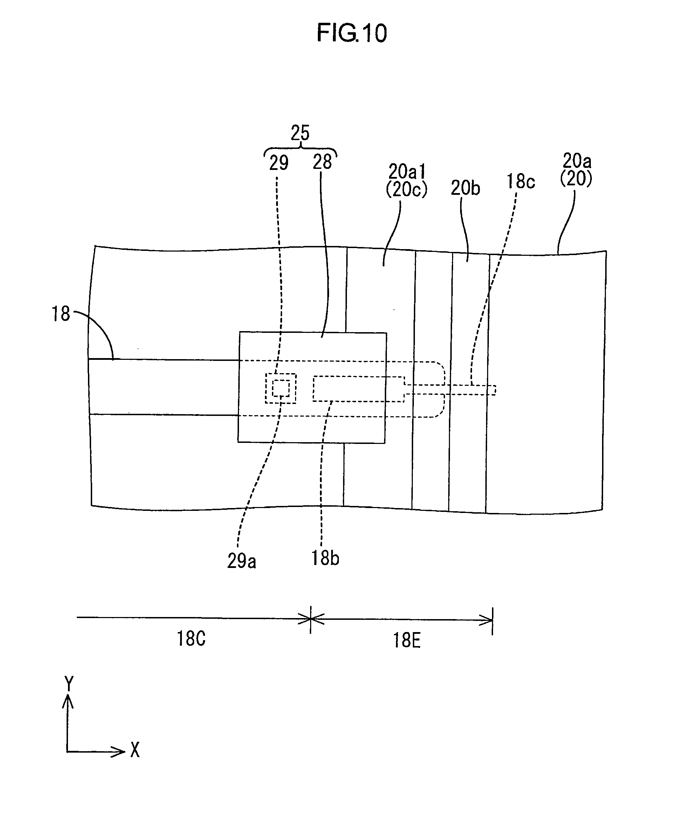

As illustrated in FIGS. 7 to 9, the pressing portion 29 is formed to be tapered such that a thickness gradually decreases as is closer to the cold cathode tube 18 from the base portion 28 and is formed in substantially a square pyramid. The pressing portion 29 is formed such that a distal end portion is chamfered and a distal end surface 29a is substantially a plane surface having a certain area. The distal end portion of the pressing portion 29 is not sharp-pointed and formed in substantially a trapezoidal square pyramid. The distal end surface 29a of the pressing portion 29 corresponds to a surface that comes in contact with the cold cathode tube 18. The basal end portion of the pressing portion 29 is connected to the middle portion of the base portion 28 in its width direction. The pressing portion 29 has maximum dimensions in the X-axis direction and in the Y-axis direction at the basal end portion and has minimum dimensions in the X-axis direction and in the Y-axis direction at the distal end portion. The pressing portion 29 has a cross-sectional area taken along a direction (the X-axis direction and the Y-axis direction) perpendicular to its projecting direction (the Z-axis direction) and has a maximum cross-sectional area at the basal end portion and has a minimum area at the distal end surface 29a. Therefore, as illustrated in FIG. 10, a contact area of the pressing portion 20 that comes in contact with the cold cathode tube 18 (the area of the distal end surface 29a) is smaller than a cross-sectional area of any portion of the pressing portion 29. The contact area of the pressing portion 20 is smaller than an area of any portion of the pressing portion overlapping the cold cathode tube 18. A maximum dimension of the pressing portion 29 in the Y-axis direction (a direction perpendicular to the direction in which the base portion 28 projects from the lamp holder 20 and also perpendicular to the projecting direction of the pressing portion 29) or the dimension of the pressing portion 29 at the basal end portion in the Y-axis direction is smaller than the dimension of the basal portion 28 in the Y-axis direction and smaller than the outer diameter dimension of the cold cathode tube 18.

As illustrated in FIG. 7, the distal end surface 29a of the pressing portion 29 comes in contact with the cold cathode tube 18 from the front side at a position in the middle portion 18C of the cold cathode tube 18 that is closer to the end portion 18E in the X-axis direction and apart (offset) from the electrode portion 18b by a certain distance. As illustrated in FIG. 8, the distal end surface 29a of the pressing portion 29 comes in contact with the cold cathode tube 18 from the front side at a middle position of the cold cathode tube 18 in the Y-axis direction that is at a position substantially same position as the outer lead 18C in the Y-axis direction. In other words, a center of the pressing portion 29 substantially matches a center of the cold cathode tube 18 in the Y-axis direction and the pressing portion 29 and the outer lead 18c are arranged on substantially a straight line along the Z-axis direction. The arrangement direction of the cold cathode tube 18 (the outer lead 18c) and the pressing portion 29 substantially matches a direction of inserting and removing the outer lead 18c with respect to the connector 22. Therefore, the cold cathode tube 18 is pressed from the front side by the pressing portion 29, and this prevents the end portion 18E (the outer lead 18c) of the cold cathode tube 18 from dropping off from the connector 22 and this effectively prevents dropping of the cold cathode tube 18.

The configuration of the present embodiment has been explained above and an operation thereof will be explained. A liquid crystal panel 11, a backlight unit 12 and a bezel 13 that are independently manufactured are assembled to each other to manufacture a liquid crystal display device 10. Processes of manufacturing the backlight unit 12 will be explained.

Each connector 22 and each lamp clip 19 are attached to the chassis 14 and the reflection sheet 15 is provided in the chassis 14. Then, each cold cathode tube 18 is housed in the chassis 14. If the cold cathode tubes 18 are mounted to the chassis 14, each end portion 18E enters the light source receiving portion 23a of the housing of each connector 22 along the Z-axis direction and each outer lead 18c is sandwiched and held between the light source contact portions 24a of the terminal connector 24 and is elastically contact with the light source connecting portions 24a (FIG. 7).

After all the cold cathode tubes 18 are arranged in the chassis 14, the lamp holder 20 is attached to either end portions of the chassis 14 in its long-side direction (FIG. 4). After the lamp holders 20 are attached to the chassis 14, an entire area of the connector 22 and most of the end portion 18E of the cold cathode tube 18 are housed in the main body 20a (FIG. 7). At this time, the pressing portion 29 of the light source pressing portion 25 comes in contact with the cold cathode tube 18 and this presses the cold cathode tube 18 from the front side. Accordingly, the cold cathode tube 18 is held so as not to be dropped off from the connector 22 and a distance between the bottom plate 14a of the chassis 14 is maintained to be constant (FIGS. 7 and 8). This stably keeps the contact state of the outer lead 18c with the terminal connector 24 and stabilizes leak current flowing to the bottom plate 14a when the light is lit on. The middle position of the pressing portion 29 substantially matches that of the cold cathode tube 18 in the Y-axis direction and the pressing portion 29 that is relatively on the front side and the outer lead 18c that is relatively on the rear side are arranged on substantially a straight line along the Z-axis direction. Therefore, it is surely prevented that the outer lead 18c that is in contact with the light source connecting portions 24a of the terminal connector 24 moves to the front side and drops off from the connector 22.

After the arrangement of the lamp holders 20, the optical member 16 is arranged to cover the opening 14b of the chassis 14, and accordingly an outer edge portion of the optical member 16 is placed on the optical member placing portions 20b of the lamp holders 20. On the rear-side surface of the chassis 14, the connector connecting portion 21a of the inverter board 21 is inserted into the board insertion opening 23c of the board receiving portion 23b o the connector 22. Accordingly, the terminal of the connector connecting portion 21a comes in contact with the board contact portion 24b of the terminal connector 24 (FIG. 7). This establishes electrical connection between the inverter board 21 and the cold cathode tube 18 via the connector 22. Thus, the backlight unit 12 is assembled (FIG. 3).

If a power is turned on in the liquid crystal display device 10 including the backlight unit 12 assembled as described above, each cold cathode tube 18 of the backlight unit 12 is lit on and image signals are transferred to the liquid crystal panel 11. As illustrated in FIG. 7, output voltage from the inverter board 21 is applied to the electrode portion 18b via the terminal connector 24 of the connector 22 and the outer lead 18c to light the cold cathode tube. Then, electrons ejected from the electrode portion 18b collide with mercury atoms in the glass tube 18a and accordingly ultraviolet rays are released from the mercury atoms. The ultraviolet rays are converted into visible rays of light by the fluorescent member and the visible rays of light are exited to outside of the glass tube 18a. The light exited from the cold cathode tube 18 is directly irradiated to the optical member 16 or reflected by the reflection sheet 15 and the inclined portion 20c and the support wall 27 of the lamp holder 20 and then indirectly irradiated to the optical member 16. The irradiated light is converted to a uniform planer light when transmitting through the optical member 16 and subsequently irradiated to the liquid crystal panel 11 to display images on the display surface.

According to the lighting of the cold cathode tube 18, high voltage is applied to the electrode portion 18b of the cold cathode tube 18 and heat is generated and the generated heat is likely to remain within the main body 20a of the lamp holder 20 that covers the end portion 18E. The amount of heat generated from the electrode portion 18b tends to increase according to depressurization of gas pressure in the cold cathode tube 18 or increase of tube current for improving brightness. According to the present embodiment, as illustrated in FIG. 6, the inner side wall 20a1 has the opening portion 26 and air flows into and from the main body 20a through the opening 26 to release heat therefrom. Especially in the first end portion 20A and the second end portion 20B of the main body 20a, the total opening area of the opening portions 26 is larger than that in the middle portion 20C. This increases the amount of flowing air and this achieves improved heat release property. Each of the first end portion 20A and the second end portion 20B includes the first opening portion 26A having the width dimension W1 covering the three cold cathode tubes 18 and includes a larger opening area compared to other opening portions 26B-26D. This further improves heat release property. Each of the first end portion 20A and the second end portion 20B has substantially an equal total opening area, and accordingly unevenness in heat release property is less likely to occur and heat is less likely to remain within the main body 20a.

A total opening area of the opening portions 26 in the middle portion 20C of the main body is smaller than that in each of the first end portion 20A and the second end portion 20B. A total surface area of the support walls 27 (a surface of the lamp holder 20 that faces the middle portion of the cold cathode tube 18) is larger than that in each of the first end portion 20A and the second end portion 20B. Therefore, the amount of light entering the main body 20a via the opening portions 26 is smaller in the middle portion 20C than in the first end portion 20A or the second end portion 20B. The amount of light reflected toward the middle portion of the cold cathode tube 18 (outside the main body 20a) by the surface of the support walls 27 is greater in the middle portion 20C than in the first end portion 20A or the second end portion 20B. A part of light entering the main body 20a may be absorbed by the main body 20a during repetitive reflection by the inner surface of the main body 20a and may not be used as the exit light of the backlight unit 12. Therefore, the amount of light entering the main body 20a is decreased and the amount of light reflected by the surface of the support walls 27 is increased to improve a ratio at which the light emitted from the cold cathode tube 18 is used as the exit light from the backlight unit 12, that is, light use efficiency. Accordingly, sufficient improved brightness is maintained in the main portion 20C. The total opening area of the opening portions 26 is large in the first end portion 20A and the second end portion 20B, and this relatively decreases light use efficiency and brightness in the first end portion 20A and the second end portion 20B compared to in the middle portion 20C. However, the brightness is selectively maintained to be high in the middle portion 20C that requires improved brightness for displaying images on the display surface of the liquid crystal display device 10. Therefore, decrease in brightness of the liquid crystal display device 10 (the backlight unit 12) as a whole is effectively prevented. This maintains high display quality of the liquid crystal display device 10.

According to lighting of the cold cathode tube 18, high voltage is applied to the electrode portion 18b of the cold cathode tube 18 and heat is generated. Therefore, the end portion 18E is likely to have relatively higher temperature than the middle portion 18C. As illustrated in FIGS. 7 and 10, the lamp holder 20 of the present embodiment includes the light source pressing portion 25 that presses the middle portion 18C that has relatively low temperature to hold the cod cathode tube 18. Compared to a case in which the main body 20a directly presses the end portion 18E that has relatively high temperature, the light source pressing portion 25 is less likely to be melted in the present embodiment. If the light source pressing portion 26 is melted, the cold cathode tube 18 may not be pressed sufficiently. In the present embodiment, the light source pressing portion 25 is less likely to be melted and the cold cathode tube 18 is held stably over time.

As illustrated in FIGS. 7, 8 and 10, the distal end surface 29a of the pressing portion 29 of the light source pressing portion 25 is in contact with the surface of the cold cathode tube 18. Therefore, light that is to exit from the cold cathode tube 18 to outside strikes the distal end surface 29a and the light striking the distal end surface 29a is easily returned into the cold cathode tube 18. The light returned into the cold cathode tube 18 may be absorbed again by mercury in the cold cathode tube 18 and if it happens, the light exit efficiency may be decreased. In the present embodiment, the pressing portion 29 is formed to be tapered such that its thickness reduces toward the distal end. The contact area of the cold cathode 18 and the pressing portion 29 is smaller than the area of a different portion of the pressing portion 29 overlapping the cold cathode tube 18. Compared to a case in which the contact area is equal to the area of the different portion of the pressing portion 29 overlapping the cold cathode tube 18, the light that is to be exited from the cold cathode tube 18 is less likely to strike the distal end surface 29a of the pressing portion 29 and to be promptly returned into the cold cathode tube 18 in the present embodiment. Therefore, this improves the light exit efficiency of the cold cathode tube 18 and brightness.

The base portion 28 of the light source pressing portion 25 covers the projected portion of the end portion 18E (the electrode portion 18b) and a portion of the middle portion 18C that is close to the end portion 18E from the front side. The projected portion is projected from the main body 20a toward the middle portion. The base portion 28 has a width dimension equal to the width dimension of the electrode portion 18b and greater than an outer diameter dimension of the cold cathode tube 18. Therefore, an entire area of the end portion 18E of the cold cathode tube 18 including the electrode portion 18b is not exposed to the front side. The electrode portion 18b is housed in the end potion 18E of the cold cathode tube 18. Therefore, the end portion 18E corresponds to the unstable light emission portion having low brightness and unevenness in brightness compared to the middle portion 18C. However, substantially an entire area of the end portion 18E is covered by the base portion 28 from the front side and the end portion 18E is less likely to be seen from outer front side and unevenness in brightness is less likely to occur. The base portion 28 has a width dimension greater than the pressing portion 29 and extends further toward the middle portion of the cold cathode tube 18 from the pressing portion 29. Therefore, the pressing portion 29 is not exposed to the front side. Accordingly, the pressing portion 29 is less likely to be seen from the outer front side and unevenness in brightness is less likely to occur. Further, the outer surface 28b of the base portion 28 facing the front side is shaped to follow the outer shape of the cold cathode tube 18. Therefore, the base portion 28 functions as a pseudo light source by the reflection light reflecting off the outer surface 28b. This preferably prevents unevenness in brightness.

As described before, the backlight unit 12 of the present embodiment includes the cold cathode tubes 18 that are light sources, the chassis 14 housing the cold cathode tubes 18 and the lamp holders 20 that are cover member. The cold cathode tube 18 includes the electrode portion 18b in the end portion 18E. The lamp holder 20 extends along one side (short-side direction) of the chassis 14 and covers the end portion 18E of the cold cathode tube 18. The lamp holder 20 includes the opening portions 26 each of which is open toward the middle portion of the cold cathode tube 18. The lamp holder 20 is configured such that the total opening area of the opening portions 26 is greater in at least one end portion in the elongated direction of the lamp holder 20 (at least one of the first end portion 20A and the second end portion 20B) than in the middle portion 20C.

Accordingly, the lamp holder 20 extending along one side of the chassis 14 covers the end portion 18E of the cold cathode tube 18 including the electrode portion 18b. The end portion 18E of the cold cathode tube 18 includes the electrode potion 18b that generates heat upon application of the voltage, and this may increase temperature of the end portion 18E. This is more likely to occur when improved high brightness is to be achieved. In the present embodiment, the lamp holder 20 includes the opening portions 26 that are open toward the middle portion of the cold cathode tube 18. Accordingly, the air is likely to flow in and out of the lamp holder 20 and heat is less likely to remain within the lamp holder 20.

In forming the opening portions 26 in the lamp holder 20, as the opening area of each opening portion increases, the amount of flowing air increases and this improves heat release property. However, light from the cold cathode tube 18 enters the lamp holder 20 via the opening portions 26 and the increase of the opening area of the opening portion 26 tends to lower the light use efficiency. As the opening area of each opening portion decreases, the light is less likely to enter the opening portions 26 and this improves light use efficiency. However, the air flowing amount is reduced and this tends to deteriorate the heat release property.

In the present embodiment, the total opening area of the opening portions 26 is greater in at least one of the end portions (the first end portion 20A and the second end portion 20B) in the elongated direction of the lamp holder 20 than in the middle portion 20C. Therefore, improved heat release property is obtained in at least one of the two end portions (the first end portion 20A and the second end portion 20B) and sufficient heat release property is obtained in a whole lamp holder. Accordingly, heat is less likely to remain within the lamp holder 20 and the lamp holder 20 is less likely to be melted. The light use efficiency is improved in the middle portion 20C of the lamp holder 20 in its elongated direction. The brightness of exit light in the middle portion 20C of the backlight unit 12 is maintained to be high. Compared to a case in which the light use efficiency is improved in the end portion, the lowering of brightness in a whole device is effectively suppressed. Accordingly, brightness is ensured in the middle portion of the display in the liquid crystal display device 10 including the backlight unit 12. This achieves good visibility. According to the present embodiment, the brightness is less likely to be lowered and the heat release property is ensured.

In the lamp holder 20, the opening area of the opening portion 26 increases as is closer to at least one of the end portions (the first end portion 20A and the second end portions 20B) away from the middle portion 20C. Accordingly, the heat release property and the light efficiency changes moderately from the middle portion 20C toward at least one of the end portions (the first end portion 20A and the second end portion 20B) in the elongated direction of the lamp holder. Therefore, unevenness in heat release property and brightness is less likely to occur.

On a surface of the lamp holder 20 facing the middle portion of the cold cathode tube 18, the opening portions 26 are intermittently formed at intervals in elongated direction of the lamp holder 20 with the support walls 27 remaining. Some of the opening portions 26 may have different opening areas. The opening portions 26 having different opening areas are formed on the surface of the lamp holder 20 facing toward the middle portion of the cold cathode tube 18, and this changes the opening area of the opening portion in the elongated direction of the lamp holder. Compared to a case in which only one opening portion is formed in the lamp holder 20 and the opening area is changed, the strength of the lamp holder 20 is kept to be high due to the remaining support walls 27 in the present embodiment.

The opening areas of the adjacent opening portions 26 are different from each other. Accordingly, the heat release property and the brightness change moderately in the elongated direction of the lamp holder 20. This suppresses occurrence of unevenness in the heat release property and the brightness.

The opening portions 26 having different opening areas have different width dimensions in the elongated direction of the lamp holder 20. Dimensions of the opening portions different in a direction perpendicular to the elongated direction of the lamp holder 20 may be varied to obtain different opening areas of the opening portions. In such a case, while the light is emitted from the cold cathode tube 18 and directed toward the light exit side of the backlight unit 12, difference in the amount of light entering each opening portion 26 easily occurs. In the present embodiment, dimensions of the opening portions different in the elongated direction of the lamp holder 20 are varied to obtain different opening areas of the opening portions 26. Therefore, while the light is emitted from the cold cathode tube 18 and directed toward the backlight unit 12, difference in the amount of light entering each opening portion 26 is less likely to occur. Accordingly, high brightness is maintained.

The cold cathode tubes 18 are arranged to be parallel to each other in the elongated direction of the lamp holder 20. Some of the opening portions 26 are formed to cover the adjacent cold cathode tubes 18. Accordingly, air flows in and out of the lamp holder 20 is accelerated via the openings 26 formed to cover the adjacent cold cathode tubes 18. This achieves excellent heat release property.

The total opening area of the opening portions 26 is larger in each of the first end portion 20A (one end portion) and the second end portion 20B (another end portion) that is located on an opposite side from the first end portion 20A than in the middle portion 20C. Thus, the total opening area of the opening portions 26 is larger in each of the two end portions 20A, 20B than in the middle portion 20C in the elongated direction of the lamp holder 20. More improved heat release property is obtained. Also, sufficient brightness is ensured in the middle portion 20C.

The opening area of each opening portion 26 increases as is closer to each of the first end portion 20A (one end portion) and the second end portion 20B (another end portion) away from the middle portion 20C. Accordingly, the heat release property and the light use efficiency change moderately from the middle portion 20C toward each of the first end portion 20A (one end portion) and the second end portion 20B (another end portion) in the elongated direction of the lamp holder 20. Therefore, unevenness is less likely to occur in the heat release property and brightness.

In the lamp holder 20, the total opening area of the opening portions 26 is substantially equal in each of the first end portion 20A (one end portion) and the second end portion 20B (another end portion). Accordingly, the heat release property is substantially same in each of the two end portions 20A, 20B in the elongated direction of the lamp holder 20 and unevenness in the heat release property is less likely to occur.

The opening portions 26 are formed in the lamp holder 20 so as to be symmetrical with the axis L passing through the center of the elongated side of the lamp holder 20. Accordingly, the heat release property and the light use efficiency of the lamp holder 20 are exerted substantially symmetrically with respect to the axis L. Thus, unevenness is less likely to occur in the heat release property and brightness. The backlight unit 12 can be used with being inverted with respect to the elongated direction of the lamp holder 20 and this improves convenience.

The cold cathode tube 18 includes the electrode portions 18b at the two end portions 18E, respectively. The lamp holder 20 is configured symmetrically with the axis L passing through a center of the elongated side of the lamp holder 20 and a pair of lamp holders 20 is mounted to the chassis 14 corresponding to the end portions 18E of the cold cathode tubes 18. Accordingly, the two same components of the lamp holders 20 are mounted to the chassis corresponding to the end portions 18E of the cold cathode tubes 18. This lowers a cost.

In the lamp holder 20, a clearance is ensured between the opening edge of the opening portion 26 and the cold cathode tube 18. Accordingly, heat is released from the clearance between the opening edge of the opening portion 26 and the cold cathode tube 18. Due to the clearance, the cold cathode tube 18 is not directly in contact with the opening edge of the opening portion 26, and the opening edge of the opening portion 26 is prevented from being melted by the heat generated from the cold cathode tube 18.

The lamp holder 20 includes the light source pressing portions 25 each of which projects toward the middle portion of the cold cathode tube 18 and presses a portion of the cold cathode tube 18 closer to the middle portion 18C from the electrode portion 18b. The cold cathode tube 18 is pressed and held by the light source pressing portion 25 included in the lamp holder 20. The end portion 18E of the cold cathode 18 includes the electrode portion 18b that generates heat by application of voltage. Therefore, temperature of the end portion 18E tends to increase compared to that of the middle portion 18C. This is likely to be caused to achieve improved brightness. The light source pressing portion 25 of the present embodiment extends toward the middle portion of the cold cathode tube 18 and presses the middle portion 18C of the cold cathode tube 18 rather than the electrode portion 19b. The temperature of the middle portion 18C is relatively lower than that of the end portion 18E on which the electrode portion 18b is provided. This prevents the light source pressing portion 25 that presses the cold cathode tube 18 from being melted and the light source pressing portion 25 effectively holds the cold cathode tube 18.

The light source pressing portion 25 includes the base portion 28 and the pressing portion 29. The base portion 28 is projected from the middle portion of the cold cathode tube 18 from the lamp holder 20 and covers a part of the middle portion 18C of the cold cathode tube 18. The pressing portion 29 extends from the base portion 28 toward the cold cathode tube 18 and comes in contact with the middle portion 18C of the cold cathode tube 18. Accordingly, the pressing portion 29 is projected toward the cold cathode tube 18 from the base portion 28 that extends from the lamp holder 20 toward the middle portion of the cold cathode tube 18 and covers a part of the middle portion 18C of the cold cathode tube 18, and the pressing portion 29 comes in contact with the middle portion 18C of the cold cathode tube 18 and holds the cold cathode tube 18.

The contact area of the distal end portion of the pressing portion 29 with the cold cathode tube 18 is smaller than an area of another portion of the pressing portion 29 overlapping the cold cathode tube 18. Compared to the case in which the contact area of the distal end portion of the pressing portion with the cold cathode tube 18 is equal to an area of another portion of the pressing portion 29 overlapping the cold cathode tube 18, light that is to be exited from the cold cathode tube 18 is less likely to be returned into the cold cathode tube 18 right after striking the distal end portion of the pressing portion 29. The light that is returned into the cold cathode tube 18 may be absorbed by the cold cathode tube 18. However, the amount of light that is returned into the cold cathode tube 18 is small in this embodiment. This improves light exit efficiency and brightness.

The pressing portion 29 is formed to be tapered such that its thickness reduces toward the distal end. Compared to a case in which the pressing portion is formed to have a step to reduce the contact area of the distal end portion with the cold cathode tube than an area of another portion of the pressing portion overlapping the cold cathode tube, the light from the cold cathode tube 18 is less likely to be shielded by the pressing portion 29 in the present embodiment, and this improves use efficiency of exit light.

The base portion 28 is formed to have substantially a same plane with the opening edge of the opening portion 26. Accordingly, the base portion 28 and the opening portion 26 are easily formed in manufacturing the lamp holder 20.

The base portion 28 is formed in substantially an umbrella shape so as to cover the pressing portion 29. Thus, the umbrella-shaped base portion 28 covers the pressing portion 29 and accordingly, the pressing portion 29 is less likely to be exposed to the light exit side of the backlight unit 12 and unevenness in brightness is less likely to occur. Compared to a case in which the base portion is formed in a flat plate, the rigidity of the base portion 28 is improved and deformation such as warping is less likely to occur and displacement is less likely to occur in the pressing portion 29 that is in contact with the cold cathode tube 18. Accordingly, the cold cathode tube 18 is held stably.

The outer lead 18c that is connected to the electrode portion 18b and projected outside is provided in the end portion 18E of the cold cathode tube 18 and the connector 22 that is to be connected to the outer lead 18c is provided in the end portion 18E. According to this configuration, the cold cathode tube 18 is pressed by the light source pressing portion 25 such that the connection between the outer lead 18c and the connector 22 is stably maintained. Accordingly, the light is emitted from the cold cathode tube 18 stably.

The connector 22 includes the terminal connector 24 that comes in contact with the outer lead 18c. The inserting and removing direction (Z-axis direction) of the outer lead 18c with respect to the terminal connector 24 substantially matches the arrangement direction of the light source pressing portion 25 and the cold cathode tube 18 (Z-axis direction). Accordingly, the pressing of the cold cathode tube 18 by the light source pressing portion 25 effectively prevents the outer lead 18c that is in contact with the terminal connector 24 from dropping off from the connector along the inserting and removing direction.

The lamp holder 20 has light reflectivity. Accordingly, light is reflected efficiently by the surface of the lamp holder 20 and this improves light use efficiency. The total opening area of the opening portions 26 is greater in the middle portion 20C of the lamp holder 20 than in at least one end portion (one of the first end portion 20A and the second end portion 20B). Improved high brightness is maintained in the middle portion 20C.

The lamp holder 20 includes the inclined portion 20c that extends toward the middle portion of the cold cathode tube 18 and is inclined toward the bottom plate of the chassis 14. With this configuration, the light is effectively reflected by the inclined portion 20c and directed toward the light exit side.

The chassis 14 includes the opening portion 14b through which the light is exited and the optical member 16 that is provided to face the cold cathode tube 18 and cover the opening portion 14b. The lamp holder 20 includes the optical member placing portion 10b on which the optical member 16 is placed. Accordingly, the optical member 16 is supported by the optical member placing portion 20b of the lamp holder 20 and a distance between the optical member 16 and each cold cathode tube 18 is maintained to be substantially constant.

Each cold cathode tube 18 is formed to be in a linear shape extending in an axial line (the X-axis direction) perpendicular to the extending direction of the lamp holder 20. The cold cathode tubes 18 are arranged in the chassis 14 such that the axial lines are parallel to each other. The lamp holder 20 collectively covers the end portions 18E of the cold cathode tubes 18. Thus, the end portions 18E of the cold cathode tubes 18 are covered collectively by the lamp holder 20 and this improves workability in assembling the backlight unit 12.

The cold cathode tube 18 is used is the light source and this extends life of the light source and dimming is carried out easily.

The first embodiment of the present invention is described above. However, the present invention is not limited thereto and may include following modifications. In each of the modifications, the same symbols are applied to the components same as in the first embodiment and they are not described in drawings and not explained.

### [First Modification of First Embodiment]

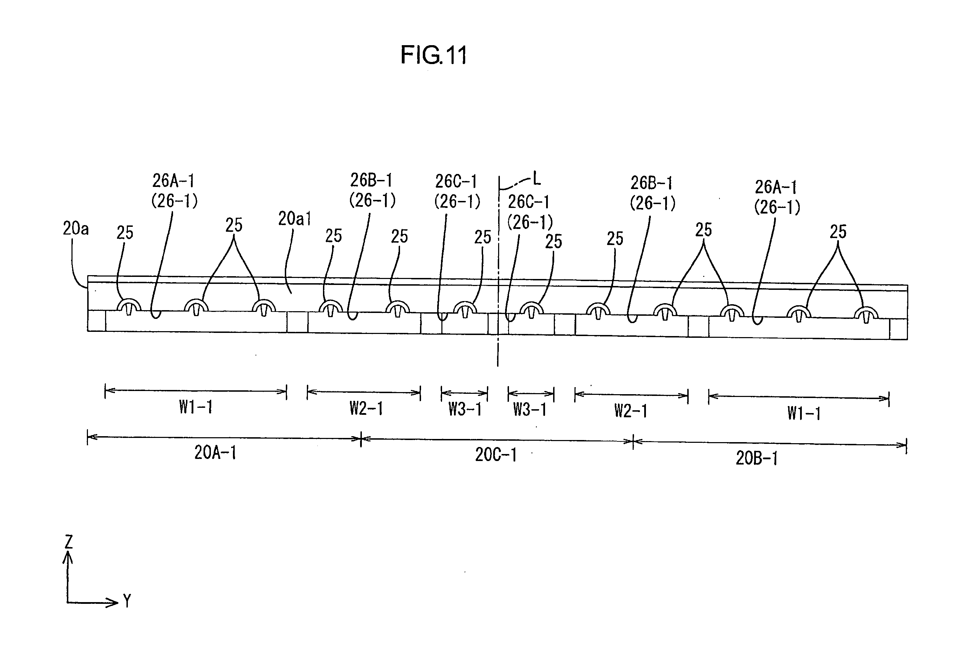

A first modification of the first embodiment will be explained with reference to FIG. 11. The number of opening portions 26-1 and a width dimension of the opening portion 26-1 are changed from those in the first embodiment.

As illustrated in FIG. 11, six opening portions 26-1 are provided in the side wall 20a1 of the main body 20 intermittently at intervals along the extending direction (the Y-axis direction) of the main body 20a. Specifically, the opening portions 26-1 include first opening portions 26A-1, third opening portions 26C-1 and second opening portions 26B-1. Each of the first opening portions 26A-1 is provided closest to the end side of the main body 20a in its extending direction. Each of the third opening portions 26C-1 is provided closest to the middle portion (the axis L) of the main body 20a. Each of the second opening portions 26B-1 is provided between the first opening portion 26A-1 and the third opening portion 26C-1. Two for each of the first to third opening portions 26A-1, 26B-1, 26C-1 are provided symmetrically with respect to the axis L. The first opening portion 26A-1 has a width dimension W1-1 that covers three cold cathode tubes 18 (the light source pressing portions 25) and is maximum. The second opening portion 26B-1 has a width dimension W2-1 that covers two cold cathode tubes 18 and is a second larges dimension. The third opening portion 26C-1 has a width dimension W3-1 that covers one cold cathode tube 18 and is minimum. Therefore, a difference between the width dimension W1-1 of the first opening portion 26A-1 and the width dimension W2-1 of the second opening portion 26B-1 that are adjacent to each other is substantially equal to a difference between the width dimension W2-1 of the second opening portion 26B-1 and the width dimension 3-1 of the third opening portion 26C-1 that are adjacent to each other. The width dimensions W1-1, W2-1, W3-1 (an opening area) changes from the first opening portion 26B-1 to the third opening portion 26C-1 by substantially a equal size.

Each of a first end portion 20A-1 and a second end portion 20B-1 includes an entire area of the first opening portion 26A-1 and approximately a half of the second opening portion 26B-1. A middle portion 20C-1 includes two sets of approximately a half of the second opening portion 26B-1 and an entire area of the third opening portion 26C-1. The width dimension W1-1 of the first opening portion 26A-1 is greater than a width dimension twice the width dimension W3-1 of the third opening portion 26C-1. Therefore, the total opening area of the opening portions 26-1 is greater in each of the first end portion 20A-1 and the second end portion 20B-1 than in the middle portion 20C-1.

### [Second Modification of First Embodiment]

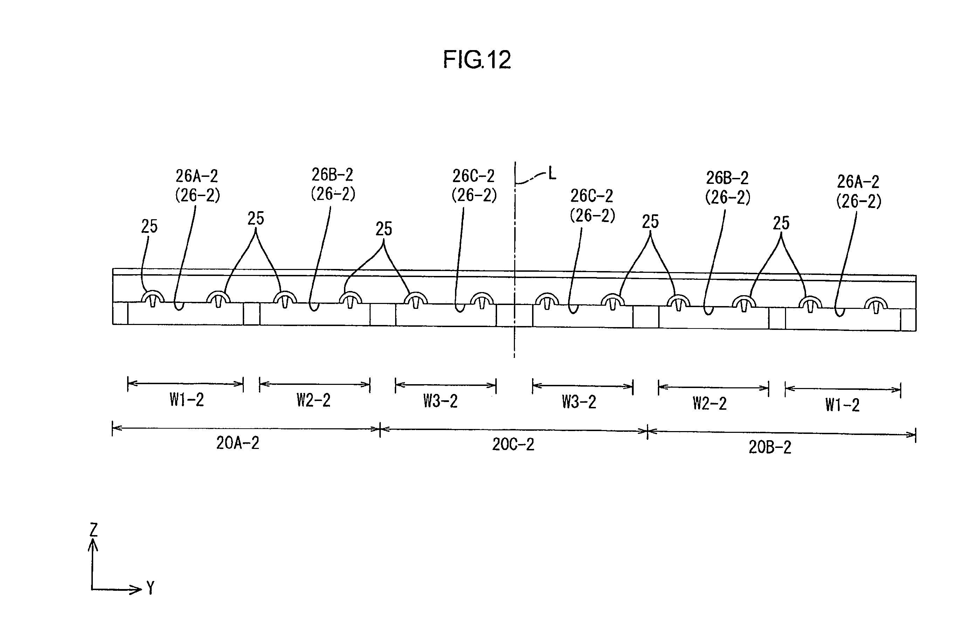

A second modification of the first embodiment will be explained with reference to FIG. 12. A width dimension of each opening portion 26-2 is changed from the first modification.

The opening portions 26-2 include first opening portions 26A-2, second opening portions 26B-2 and third opening portions 26C-2. As illustrated in FIG. 12, each of width dimensions W1-2, W2-2, W3-2 has a width dimension so as to cover two cold cathode tubes 18 (two light source pressing portions 25) and has a slightly different dimension. The width dimensions W1-2, W2-2, W3-2 (opening area) of the opening portion 26A-2, 26B-2, 26C-2 increase from the width dimension W3-2 of the third opening portion 26C-2, the width dimension W2-2 of the second opening portion 26B-2 and the width dimension W1-2 of the first opening portion 26A-2 in this order. A difference between the width dimensions W1-2 to W3-2 is very slight and is smaller than each of the width dimensions W1-2 to W3-2 and an outer diameter dimension of the cold cathode tube 18.

Each of the first end portion 20A-2 and the second end portion 20B-2 includes one first opening portion 26A-2 and one second opening portion 26B-2 and the middle portion 20C-2 includes two third opening portions 26C-2. The third opening portion 26C-2 has a minimum width dimension W3-2. Therefore, a total opening area of the opening portions 26-2 in each of the first end portion 20A-2 and the second end portion 20B-2 is greater than that in the middle portion 20C-2. A difference between the total opening area of the opening portions in the middle portion 20C-2 and the total opening area of the opening portions 26-2 in each of the first end portion 20A-2 and the second end portion 20B-2 is equal to a total of a difference between the opening areas of the first opening portion 26A-2 and the third opening portion 26C-2 and a difference between the opening areas of the second opening portion 26B-2 and the third opening portion 26C-2. The difference between the total opening area of the opening portions in the middle portion 20C-2 and the total opening area of the opening portions 26-2 in each of the first end portion 20A-2 and the second end portion 20B-2 is smaller than that in the first embodiment and that in the first modification. Therefore, in the present modification, the heat release property and brightness changes in a more moderate manner in each of the first end portion 20A-2, the second end portion 20B-2 and the middle portion 20C-2.

### [Third Modification of First Embodiment]

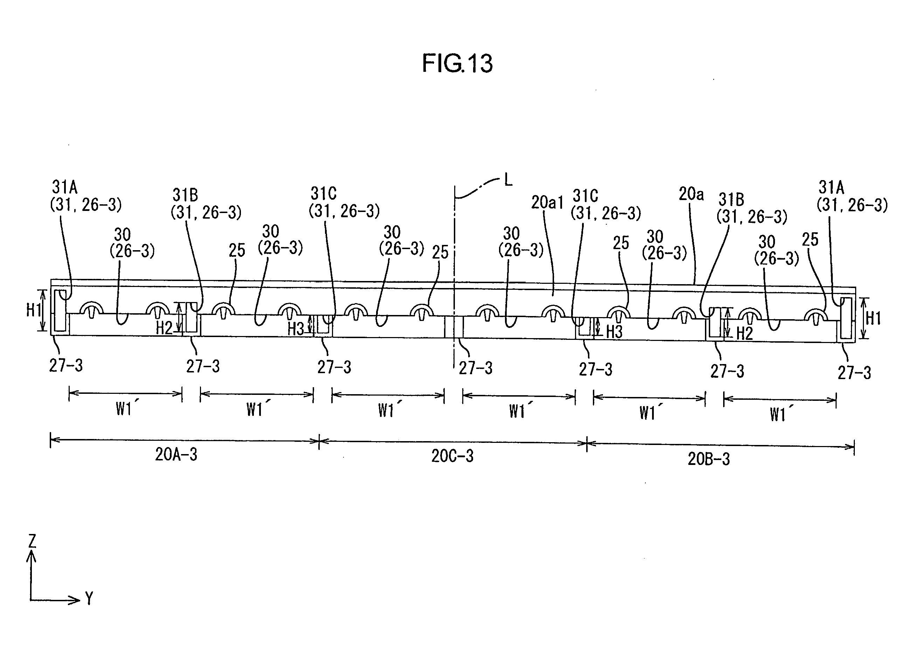

A third modification of the first embodiment will be explained with reference to FIG. 13. In this modification, a configuration of an opening portion 26-3 is modified.

As illustrated in FIG. 13, the opening portions 26-3 include main opening portions 30 (six main opening portions 30) and auxiliary opening portions 31. The six main opening portions 30 are formed in the side wall 20a1 of the main body 20a intermittently at intervals along its extending direction
(the Y-axis direction) with the support walls 27-3 remaining. The auxiliary opening portions 31 are formed in the side wall 20a1. Each of the main opening portions 30 has a width dimension W1' that covers two cold cathode tubes 18 (the light source pressing portions 25) like the opening portion 26-2 of the second modification. However, the width dimension W1' (an opening area) of each main opening portion 30 is equal to each other. The auxiliary opening portion 31 is formed in the support walls 27-3 of the side wall 20a1 excluding the middle support wall 27-3 (that overlaps the axis L). A first auxiliary opening portion 31A is formed in each support wall 27-3 closest to each end of the side wall 20a-1 in its extending direction. A second auxiliary opening portion 31B is formed in each support wall 27-3 next closer to each end of the side wall 20a-1 in its extending direction. A third auxiliary opening portion 31C is formed in each support wall 27-3 that is closer to the middle support wall 27-3. Each of the auxiliary opening portions 31A-31C has a same width dimension in the Y-axis direction and has different height dimensions H1-H3 in the Z-axis direction. The height dimension increases from the middle portion toward the end portions of the side wall. That is, the height dimension increases from the height dimension H3 of the third auxiliary opening portion 31C, the height dimension H2 of the second auxiliary opening portion 31B and the height dimension H1 of the first auxiliary opening portion 31A in this order. Among the auxiliary opening portions 31A-31C, the first auxiliary opening portion 31A that is closest to the end portion has a maximum opening area and the third auxiliary opening portion 31C that is closest to the middle portion has a minimum opening area.

Each of the first end portion 20A-3 and the second end portion 20B-3 includes two main opening portions 30, an entire area of the first auxiliary opening portion 31A, an entire area of the second auxiliary opening portion 31B and a part of the third auxiliary opening portion 31C. The middle portion 20C-3 includes two main opening portions 30 and most part of two third auxiliary opening portions 31C. Therefore, a total opening area of the opening portions 26-3 in each of the first end portion 20A-3 and the second end portion 20B-3 is greater than a total opening area of the opening portions 26-3 in the middle portion 20C-3.

### <Second Embodiment>

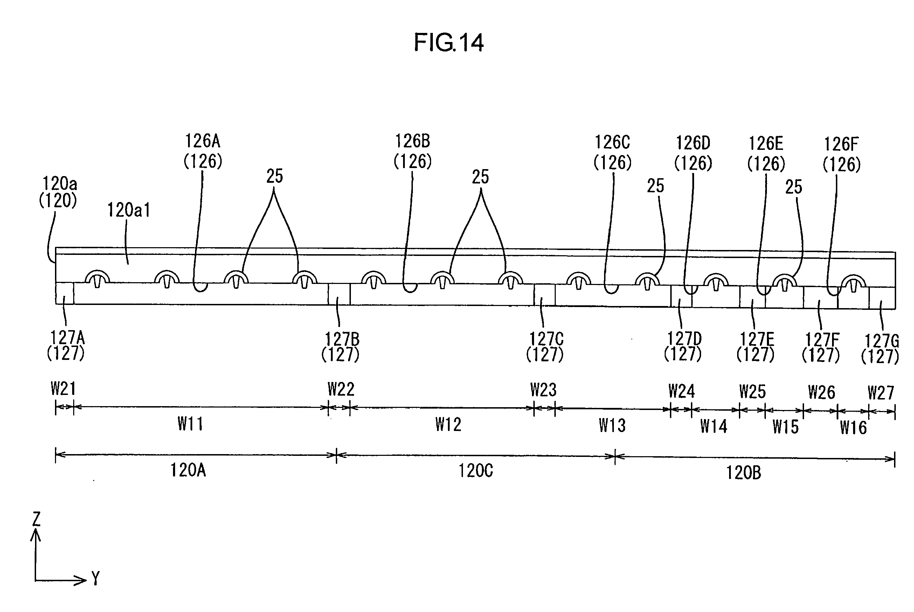

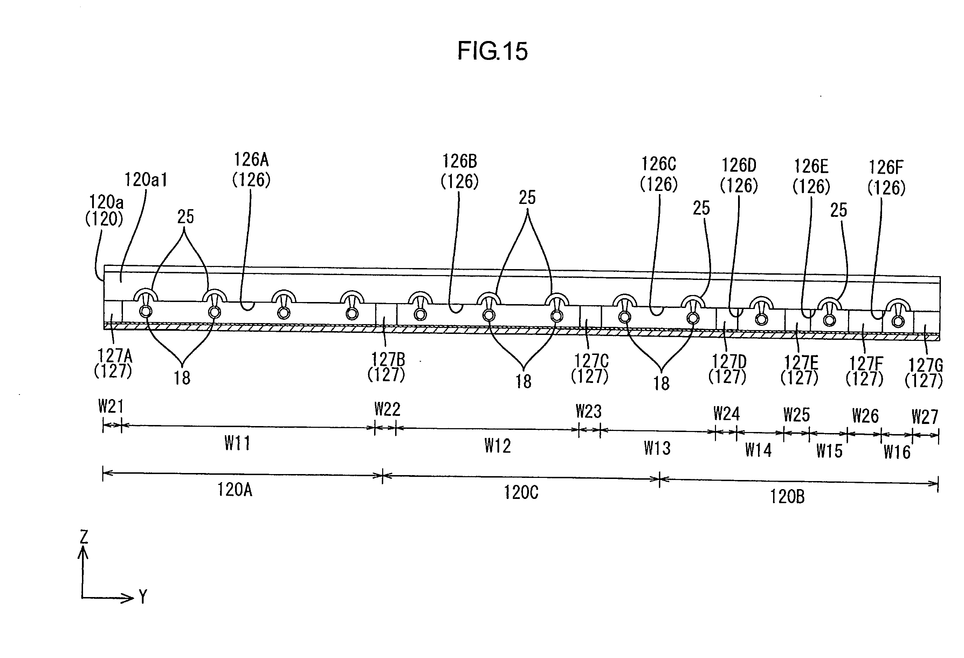

A second embodiment will be explained with reference to FIGS. 14 and 15. In the second embodiment, an opening area of opening portions 126 in each portion 120A-120C of a lamp holder 120 changes with reference to a vertical direction. A configuration, operations and effects similar to the first embodiment will not be described.

In the second embodiment, a left side in FIGS. 14 and 15 corresponds to an upper side in a vertical direction and a right side in FIGS. 14 and 15 corresponds a lower side in the vertical direction. A first end portion 120A of the lamp holder 120 in its extending direction (the Y-axis direction) corresponds to an upper end portion in the vertical direction and a second end portion 120B corresponds to a lower end portion in the vertical direction. Six opening portions 126 are arranged to be parallel to each other intermittently at intervals in the side wall 120a1 of the main body 120a with the support walls 127 remaining. A width dimension or an opening area of each of the opening portions 126 decreases gradually from the upper end portion toward the lower end portion (from the upper end portion toward the middle portion and from the middle portion toward the lower end portion) in the vertical direction (extending direction) and increases gradually from the lower end portion toward the upper end portion (from the lower end portion toward the middle portion and from the middle portion toward the upper end portion) in the vertical direction. Each of the support walls 127 that are provided in adjacent to each opening portion 126 also changes in its width dimension or its surface area according to the opening portions 126. Specifically, the width dimension or the surface area of each support wall 127 increases gradually from the upper end portion toward the lower end portion in the vertical direction and decreases gradually from the lower end portion toward the upper end portion (excluding the lowest seventh support wall 127G).
In the present embodiment, for simple explanation, the opening portions 126 include a first opening portion 126A, a second opening portion 126B, a third opening portion 126C, a fourth opening portion 126D, a fifth opening portion 126E and a sixth opening portion 126F from the upper end portion toward the lower end portion in the vertical direction. The support walls 127 include a first support wall 127A, a second support wall 127B, a third support wall 237C, a fourth support wall 237D, a sixth support wall 127F and a seventh support wall 237G from the upper end portion toward the lower end portion in the vertical direction.

The first opening portion 126A that is provided at the uppermost side (the upper end) in the vertical direction has a width dimension W11 that covers four cold cathode tubes 18 (the light source pressing portions 25) and is maximum. The second opening portion 126B that is provided in adjacent to and at a lower side of the first opening portion 126A in the vertical direction has a width dimension W12 that covers three cold cathode tubes 18 (the light source pressing portions 25) and is a second greatest dimension. The third opening portion 126C that is provided in adjacent to and at a lower side of the second opening portion 126B has a width dimension W13 that covers two cold cathode tubes 18 (the light source pressing portions 25) and is a third greatest dimension. Therefore, a difference between the width dimension W11 of the first opening portion 126a and the width dimension W12 of the second opening portion 126B that area adjacent to each other is substantially same as a difference between the width dimension W12 of the second opening portion 126B and the width dimension W13 of the third opening portion 126C that are adjacent to each other. Each of the width dimensions W11, W12, W13 (opening area) of the first opening portion 126A, the second opening portion 126B and the third opening portion 126C changes by substantially a same size.

Each of the fourth opening portion 126D, the fifth opening portion 126E and the sixth opening portion 126F that are provided at the lower side of the third opening portion 126C in the vertical direction has a width dimension that covers one cold cathode tube 18 (the light source pressing portion 25) and is slightly different from each other. The width dimensions W14-W16 (the opening areas) of the opening portions 126D-126F decrease from the width dimension W14 of the fourth opening portion 126D, the width dimension W15 of the fifth opening portion 126E and the width dimension W16 of the sixth opening portion 126F. A differences between the width dimensions W14-W16 of the opening portions 126D-126F is slight and smaller than each of the width dimensions W14-W16 and an outer diameter dimension of the cold cathode tube 18. The width dimensions W21-W26 of the first support wall 127A to sixth support wall 127F change gradually in the vertical direction such that the first support wall 127A has a minimum width dimension and the sixth support wall 127F has a maximum width dimension.

The first end portion 120A that is an upper end portion of the lamp holder 120 in the vertical direction includes an entire area of the first support wall 127A, an entire area of the first opening portion 126A and approximately a half of the second support wall 127B. The middle portion 120C includes approximately a half of the second support wall, an entire area of the second opening portion 126B, an entire area of the third support wall 127C and approximately a half of the third opening portion 126C. The width dimension W21 of the first support wall 127A is smaller than the width dimension W23 of the third support portion 127C. Therefore, an opening area of the opening portion 126 in the first end portion 120A is greater than the total opening area of the opening portions 126 in the middle portion 120C. The second end portion 120B that is provided at the lower end portion of the lamp holder 120 in the vertical direction includes approximately a half of the third opening portion 126C, entire areas of the fourth opening portion 126D, the fifth opening portion 126E and the sixth opening portion 126F and entire areas of the fourth support wall 127D, the fifth support wall 127E, the sixth support wall 127F and the seventh support wall 127G. Therefore, the opening area of the opening portion 126 in the first end portion 120A and the total opening area of the opening portions 126 in the middle portion 120C are respectively greater than the total opening area of the opening portions 126 in the second end portion 120B.

### Following operations and advantageous effects are obtained with the above configurations.

If the liquid crystal display device 10 of the present embodiment is used such that the Y-axis direction (the elongated direction) matches the vertical direction, air in the main body 120a of the lamp holder 120 is heated by heat generated from the end portion 18E of each cold cathode tube 18 and flows upwardly in the vertical direction. This causes rising air in the main body 120a. The air in the main body 120a flows from the second end portion 120B toward the first end portion 120A. In the first end portion 120A that is located at a lower stream side of the air flow, the opening area of the opening portions 126 of the lamp holder is maximum. Therefore, the air in the main body 120a is effectively flows out (discharge) to the outside. Further, the total opening area of the opening portions 126 is greater in the middle portion 120C that is provided in adjacent to the first end portion 120A at the lower side thereof in the vertical direction than in the second end portion 120B that is located at the lowest end in the vertical direction. Therefore, in addition to the effects of the maximum opening area in the first end portion 120A, the air in the main body 120a effectively flows to outside. This achieves improved heat release property. Further, the total opening area of the opening portions 126 in the middle portion 120C is smaller than the opening area of the opening portion 126 in the first end portion 120A and the total surface area of the support walls 127 is greater in the middle portion 120C than in the first end portion 120A. This maintains high light use efficiency and high brightness and good display quality is obtained.

According to the present embodiment, the lamp holder 120 is arranged such that its extending direction matches the vertical direction and the first end portion 120A (one end portion) corresponds to the upper end portion in the vertical direction. In the lamp holder 120 that is provided such that its extending direction matches the vertical direction, the rising air is caused due to heat generated from the end portion 18E of each cold cathode tube 18. The opening area of the opening portion 126 in the first end portion 120A that is the upper end portion in the vertical direction is greater than the total opening area of the opening portions 126 in the middle portion 120C. This accelerates air flow from the inside of the lamp holder 120 to outside with using the rising air. Accordingly, high heat release property is obtained.

The lamp holder 120 is configured such that the opening area of the opening portions 126 increases from the middle portion 120C toward the first end portion 120A that is an upper end portion. Accordingly, the heat release property and the light use efficiency change in a moderate manner from the middle portion 120C toward the first end portion 120A in the extending direction of the lamp holder 120. The first end portion 120A is the upper end portion of the lamp holder 120 in the vertical direction. Accordingly, unevenness is less likely to occur in the heat release property and the brightness.

The lamp holder 120 is configured such that the total opening area of the opening portions 126 is greater in the middle portion 120C than in the second end portion 120B that is the lower end portion of the lamp holder 120 in the vertical direction. Thus, the total opening area of the opening portions 126 in the middle portion 120C is greater than that in the second end portion 120B that is the lower end portion in the vertical direction. Accordingly, air flowing is accelerated by using the rising air generated in the lamp holder 120 and this achieves high heat release property. The total opening area of the opening portions 126 in the middle portion 120C is smaller than the opening area of the opening portion 126 in the first end portion 120A that is the upper end portion in the vertical direction. Therefore, brightness is sufficiently ensured.

The lamp holder 120 is configured such that the total opening area of the opening portions 126 increases from the second end portion 120B that is the lower end portion toward the middle portion 120C. Accordingly, the heat release property and the light use efficiency change in a moderate manner in the extending direction of the lamp holder 120 from the second end portion 120B that is the lower end portion in the vertical direction toward the middle portion 120C. Thus, unevenness is less likely to occur in the heat release property and the brightness.

The lamp holder 120 is configured such that the total opening area of the opening portions 126 increases from the second end portion 120B that is the lower end portion toward the first end portion 120A that is the upper end portion. Accordingly, the heat release property and the light use efficiency change in a moderate manner in the extending direction of the lamp holder 120 from the second end portion 120B that is the lower end portion in the vertical direction toward the first end portion 120A that is the upper end portion. Unevenness is less likely to occur in the heat release property and brightness.

The second embodiment is described above. However, the present invention is not limited to the above embodiments and may include following modifications, for example. In the following modifications, the symbols same as in the above embodiments are applied to components same as those in the above embodiments and the components will not described in drawings and not explained.

### [First Modification of Second Embodiment]

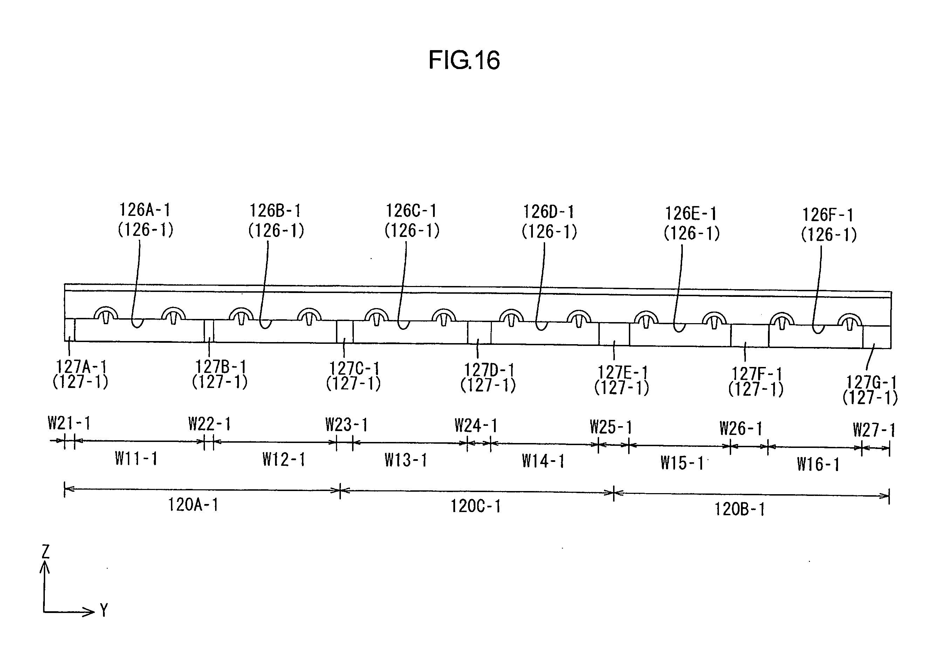

A first modification of the second embodiment will be explained with reference to FIG. 16. A width dimension of an opening portion 126-1 is amended from the second embodiment.

As illustrated in FIG. 16, the opening portions 126-1 including a first opening portion 126A-1 to a sixth opening portion 126F-1 have width dimensions W11-1 to W16-1, respectively, each of which covers two cold cathode tubes 18 (the light source pressing portions 26) and each of which is slightly different from each other. The width dimension of the opening portion is greater as is closer to the upper side in the vertical direction and is smaller as is closer to the lower side in the vertical direction. Each of the differences between the width dimensions W11-1 to W16-1 of the opening portions 126A-1 to 126F-1 is very small and smaller than each of the width dimensions W11-1 to W16-1 and an outer diameter dimension of the cold cathode tube 18. Support walls 127-1 including second support wall 127B-1 to a sixth support wall 127F-1 have width dimensions W22-1 to W26-1, respectively, each of which is slightly different from each other. The width dimension of the side wall is smaller as is closer to the upper side in the vertical direction and is greater as is closer to the lower side in the vertical direction.

A first end portion 120A-1 that is the upper end portion in the vertical direction includes entire areas of the first opening portion 126A-1 and the second opening portion 126B-1. A middle portion 120C-1 includes entire areas of the third opening portion 126C-1 and the fourth opening portion 126D-1. Therefore, a total opening area of the opening portions 126-1 in the first end portion 120A-1 is greater than a total opening area of the opening portions 126-1 in the middle portion 120C-1. A second end portion 120B-1 that is the lower end portion in the vertical direction includes entire areas of the fifth opening portion 126E-1 and the sixth opening portion 126F-1. Therefore, a total opening area of the opening portions 126-1 in each of the first end portion 120A-1 and the middle portion 120C-1 is greater than a total opening area of the opening portions 126-1 in the second end portion 120B-1.

### [Second Modification of Second Embodiment]

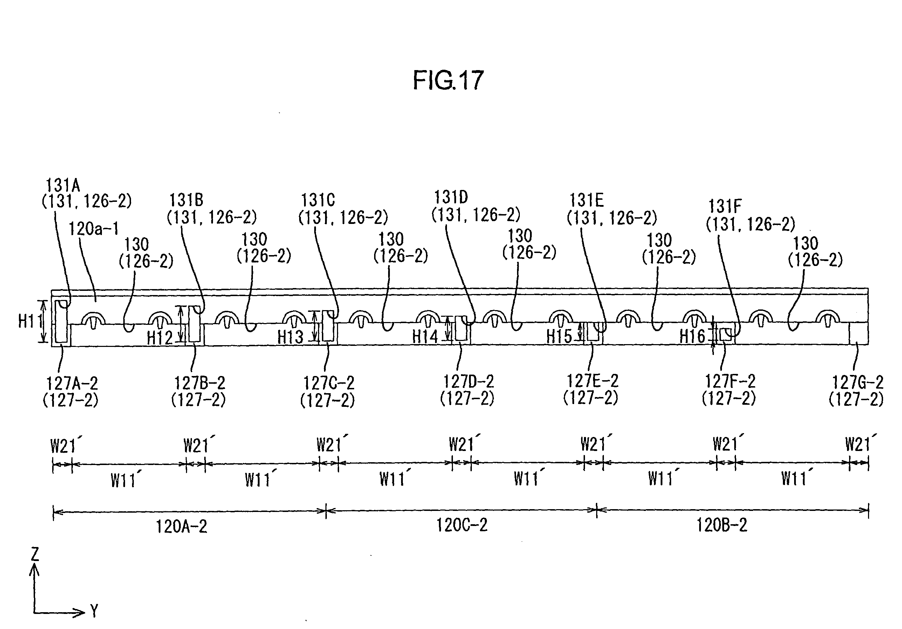

A second modification of the second embodiment will be explained with reference to FIG. 17. A configuration of an opening 126-2 is amended from the first modification of the second embodiment to be similar to the third modification of the first embodiment.

As illustrated in FIG. 17, opening portions 126-2 include six main opening portions 130 and auxiliary opening portions 131. The main opening portions 130 are formed in a side wall 120a1 of a main body 120a intermittently at intervals in the extending direction of the side wall 120a1 (the Y-axis direction) with the support walls 127-2 remaining. The auxiliary opening portions 131 are formed in the side wall 120a1. Each of the main opening portions 130 has a width dimension W11' that covers two cold cathode tubes 18 (the light source pressing portions 25) like the opening portion 126-1 of the first modification of the second embodiment. However, each of the width dimensions W11' (an opening areas) is equal to each other. A width dimension W21' of each of the support walls 127-2 is equal to each other. The auxiliary opening portions 131 are formed in each of the support walls 127A-2 to 127F-2 of the side wall 120a1 excluding the seventh support wall 127-2 that is the lowest end in the vertical direction. Specifically, a first auxiliary opening portion 131A is formed in the first support wall 127A-2 that is the uppermost end in the vertical direction, a second auxiliary opening portion 131B is formed in the second support wall 127B-2, a third auxiliary opening portion 131C is formed in the third support wall 127C-2, a fourth auxiliary opening portion 131D is formed in the fourth support wall 127D-2, a fifth auxiliary opening portion 131E is formed in the fifth support wall 127E-2, and a sixth auxiliary opening portion 131F is formed in the sixth support wall 127F-2. Each of the auxiliary opening portions 131A to 131F has an equal dimension in the Y-axis direction and has an equal width dimension. However, the auxiliary opening portions 131A to 131F have different dimensions in the Z-axis direction and have different height dimensions H11 to H16. The height dimension increases from the lower end portion toward the upper end portion in the vertical direction. Especially, the height dimension increases from the height dimension H16 of the sixth auxiliary opening portion 131F, the height dimension H15 of the fifth auxiliary opening portion 131E, the height dimension H14 of the fourth auxiliary opening portion 131D, the height dimension H13 of the third auxiliary opening portion 131C, the height dimension H12 of the second auxiliary opening portion 131B and the height dimension H11 of the third auxiliary opening portion 131A in this order. Among the auxiliary opening portions 131A to 131F, the opening area of the first auxiliary opening portion 131A that is the uppermost end in the vertical direction is maximum and the opening area of the sixth auxiliary opening portion 131F that is the lowest end in the vertical direction is minimum.

A first end portion 120A-2 that is an upper end portion in the vertical direction includes two main opening portions 130, an entire area of the first auxiliary opening portion 131A, an entire area of the second auxiliary opening portion 131B and approximately a half of the third auxiliary opening portion 131C. A middle portion 120C-2 includes two main opening portions 130, approximately a half of the third auxiliary opening portion 131C, an entire area of the fourth auxiliary opening portion 131D and an entire area of the fifth auxiliary opening portion 131E. Therefore, a total opening area of the opening portions 126-2 in the first end portion 120A-2 is greater than a total opening area of the opening portions 126-2 in the middle portion 120C-2. A second end portion 120B-2 that is a lower end portion in the vertical direction includes two main opening portions 130 and an entire area of the sixth auxiliary opening portion 131E. Therefore, a total opening area of the opening portions 126-2 in each of the first end portion 120A-2 and the middle portion 120C-2 is greater than a total opening area of the opening portions 126-2 in the second end portion 120B-2.

### <Other Embodiments>

The present invention is not limited to the embodiments as described above with reference to the drawings. For example, the present invention may include following embodiments.
(1) In the first embodiment, the total opening area of the opening portions is greater in each of the first end portion and the second end portion in the extending direction of the lamp holder than in the middle portion. The total opening area of the opening portions may be greater in the first end portion than in the middle portion and may be smaller in the second end portion than in the middle portion.

(2) In addition to the configuration described in (1), the total opening area of the opening portions may be greater in the first end portion than in the middle portion and may be substantially equal to each other in the second end portion and in the middle portion. The total opening area of the opening portions may be greater in the second end portion than in the middle portion and may be substantially equal to each other in the first end portion and in the middle portion.

(3) In the first embodiment, among the opening portions that are provided in the extending direction of the lamp holder, the opening area of the opening portion closer to the end of the lamp holder is greater than that of the opening portion closer to the middle portion. The opening portion closer to the end of the lamp holder may have an opening area smaller than the opening portion closer to the middle portion.

(4) In the second embodiment, among the opening portions that are provided in the extending direction of the lamp holder, the opening area of the opening portion closer to the upper end portion (the middle portion) is greater than that of the opening portion closer to the middle portion (the lower end portion). The opening portion closer to the upper end portion (the middle portion) may have an opening area smaller than the opening portion closer to the middle portion (the lower end portion).

(5) In the first embodiment, the opening portions are provided symmetrically with the axis passing through a center of the elongated side of the lamp holder. The opening portions may be provided asymmetrically.

(6) In the first embodiment, the lamp holder is configured symmetrically with the axis passing through the center of the elongated side of the lamp holder. The lamp holder may be configured in a non-symmetrically shape. In such a case, the opening portions may be arranged symmetrically with the axis.

(7) In the above embodiments, the opening area of each opening portion is different from each other. However, a plurality of opening portions may have a same opening area. In such a case, the opening portions each having the same opening area may be arranged not to be in adjacent to each other or to be in adjacent to each other.

(8) In the above embodiments, each of the opening portions has a same height dimension and the width dimension of the opening portion is varied to change an opening area of each opening portion. However, each of the opening portions may have a same width dimension and the height dimension of the opening portion may be varied to change an opening area of each opening portion. Further, the height dimension and the width dimension of the opening portion may be varied to change an opening area of each opening portion.

(9) In the third modification of the first embodiment and in the second modification of the second embodiment, the opening area of each main opening portion is equal to each other and the opening area of each auxiliary opening portion is different from each other. However, the opening area of each main opening portion may be different from each other and the opening area of each auxiliary opening may be equal to each other. The opening area of each main opening portion and each auxiliary opening may be varied to change the opening area as a whole. With the configuration described in (7), a plurality of main opening portions may have a same opening area and a plurality of auxiliary opening portions may have a same opening area. Also, with the configuration described in (8), at least one of the height dimension and the width dimension may be varied to change the opening area of the main opening portion and the auxiliary opening portion.

(10) In the second modification of the first embodiment and in the first modification of the second embodiment, all the opening portions have a width dimension that covers two cold cathode tubes. However, all the opening portions may have a width dimension that covers one cold cathode tube or may have a width dimension that covers three cold cathode tubes or more.

(11) In addition to the above embodiments, the number of opening portions, the arrangement of the opening portions, a width dimension and a height dimension of the opening portions may be altered if necessary. The number of cold cathode tubes and the arrangement (the arrangement intervals) of the cold cathode tubes may be altered if necessary.

(12) In the above embodiments, the extending direction of the lamp holder matches the short-side direction of the chassis, and the axial line of the cold cathode tube matches the long-side direction of the chassis. However, the extending direction of the lamp holder may match the long-side direction and the axial line of the cold cathode tube may match the short-side direction of the chassis.

(13) In the above embodiments, the base portion of the light source pressing portion is formed to have an arc-shaped cross section and the pressing portion is formed in a square pyramid. However, a specific shape of the base portion and the pressing portion may be altered if necessary. For example, the base portion may be formed in a flat plate-like shape and the pressing portion may be formed in a circular cone, a square column or a circular cylinder.

(14) In the above embodiments, the width dimension of the light source pressing portion is greater than that of the electrode portion and that of the cold cathode tube. For example, the width dimension of the base portion may be substantially equal to that of the cold cathode tube or that of the electrode portion. Also, the width dimension of the base portion may be greater than that of the electrode portion and smaller than that of the cold cathode tube, or may be smaller than that of the electrode portion and that of the cold cathode tube.

(15) In the above embodiments, the light source pressing portion has the base portion having the width dimension greater than the pressing portion. For example, a width dimension of the base portion may be substantially equal to that of the pressing portion.

(16) In the above embodiments, a clearance is ensured between the opening edge of the opening portion and the cold cathode tube. However, the opening edge of the opening portion may be directly in contact with the cold cathode tube and no clearance may be generated therebetween. In such a case, the light source pressing portion may not be provided.

(17) In the above embodiments, straight cold cathode tubes are used. However, U-shaped cold cathode tubes or W-shaped cold cathode tubes may be used.

(18) In the above embodiments, the cold cathode tube includes the electrode portion in the glass tube. However, the cold cathode tube may include the electrode portion outside the glass tube and on the end portion of the glass tube.

(19) In the above embodiments, the end portion of the cold cathode tube is fitted and connected to the connector. However, for example, an end of the electric wire may be connected to the outer lead of the cold cathode tube with solder to establish electric connection with the inverter board.

(20) In the above embodiments, the cold cathode tube is used as the light source (the linear light source). For example, a hot cathode tube may be used as the light source and other kinds of fluorescent tubes and discharge tubes (such as mercury lamps) may be used as the light source.

(21) In the above embodiments, the liquid crystal panel and the chassis are arranged in a vertical position such that the short-side direction matches the vertical direction. However, the liquid crystal panel and the chassis are arranged in a vertical position such that the long-side direction matches the vertical direction.

(22) In the above embodiments, TFTs are used as switching components of the liquid crystal display device. However, the technology described above can be applied to liquid crystal display devices including switching components other than TFTs (e.g., thin film diode (TFD)). Moreover, the technology can be applied to not only color liquid crystal display devices but also black-and-white liquid crystal display devices.

(23) In the above embodiments, the liquid crystal display device including the liquid crystal panel as a display panel. The technology can be applied to display devices including other types of display components.

### EXPLANATION OF SYMBOLS

10: Liquid crystal display device (Display device), 11: Liquid crystal panel (Display panel), 12: Backlight unit (Lighting device), 14: Chassis, 14b: Opening, 16: Optical member, 18: Cold cathode tube (light source), 18b: Electrode portion, 18c: Outer lead, 18C: End portion, 18E: Middle portion, 20, 120: Lamp holder (Cover member), 20b: Optical member placing portion, 20c: Inclined portion, 22: Connector, 24: Terminal connector, 25: Light source pressing portion, 26, 126: Opening portion, 27, 127: Support wall (Wall), 28: Base portion, 29: Pressing portion, 120A: First end portion (Upper end portion), 120B: Second end portion (Lower end portion), 120C: Middle portion, L: Axis, TV: television receiver

## Claims

1. A lighting device comprising:
a light source including an electrode portion at its one end portion;
a chassis configured to house the light source therein; and
a cover member extending along a side of the chassis and configured to cover the one end portion of the light source, and the cover member having opening portions open toward a middle portion of the light source, wherein:
the cover member is configured such that a total opening area of the opening portions is greater in one of two end portions of the cover member in its extending direction than in a middle portion of the cover member.

2. The lighting device according to claim 1, wherein the cover member is configured such that an opening area of the opening portions increases from the middle portion toward at least the one of the two end portions of the cover member.

3. The lighting device according to one of claims 1 and 2, wherein:
the cover member includes a surface facing the middle portion of the light source;
the opening portions are provided in the surface of the cover member at intervals in the extending direction of the cover member with walls remaining between the opening portions; and
some of the opening portions have different opening areas.

4. The lighting device according to claim 3, wherein the opening portions that are provided in adjacent to each other have different opening areas.

5. The lighting device according to one of claims 3 and 4, wherein the opening portions having different opening areas have dimensions different in the extending direction of the cover member.

6. The lighting device according to any one of claims 3 to 5, wherein:
the light source includes a plurality of light sources that are arranged to be parallel to each other in the extending direction of the cover member; and
at least one of the opening portions is formed to cover at least two adjacent light sources of the plurality of light sources.

7. The lighting device according to any one of claims 1 to 6, wherein the cover member is configured such that the total opening area of the opening portions is greater in each of the two end portions than in the middle portion.

8. The lighting device according to claim 7, wherein the cover member is configured such that the opening area of the opening portion increases from the middle portion toward each of the two end portions.

9. The lighting device according to one of claims 7 and 8, wherein the cover member is configured such that the total opening area of the opening portions is substantially equal in each of the two end portions.

10. The lighting device according to claim 9, wherein the cover member is configured such that the opening portions are provided symmetrically with an axis passing through a center of an elongated side of the cover member.

11. The lighting device according to claim 10, wherein:
the light source includes the electrode portion at each of two ends of the light source;
the cover member is configured symmetrically with the axis passing through the center of the elongated side of the cover member; and
the cover member includes a pair of cover members and each of the cover members is provided to the chassis corresponding to each of the two ends of the light source.

12. The lighting device according to any one of claims 1 to 6, wherein the cover member is provided such that the extending direction matches a vertical direction and the one of the two end portions of the cover member corresponds to an upper end portion in the vertical direction.

13. The lighting device according to claim 12, wherein the cover member is configured such that the opening area of the opening portion increases from the middle portion toward the upper end portion.

14. The lighting device according to one of claims 12 and 13, wherein the cover member is configured such that the total opening area of the opening portions is greater in the middle portion than in a lower end portion in the vertical direction.

15. The lighting device according to claim 14, wherein the cover member is configured such that the opening area of the opening portion increases from the lower end portion toward the middle portion.

16. The lighting device according to one of claims 14 and 15, wherein the cover member is configured such that the opening area of the opening portion increases from the lower end portion toward the upper end portion.

17. The lighting device according to any one of claims 1 to 16, wherein the cover member is configured such that a clearance is generated between an opening edge of the opening portion and the light source.

18. The lighting device according to claim 17, wherein the cover member includes a light source pressing portion extending toward the middle portion of the light source and pressing a portion of the light source closer to the middle portion from the electrode portion.

19. The lighting device according to claim 18, wherein:
the light source pressing portion includes a base portion and a pressing portion;
the base portion extends from the cover member toward the middle portion of the light source and covers a part of the middle portion of the light source; and
the pressing portion extends from the base portion toward the light source and comes in contact with the middle portion of the light source.

20. The lighting device according to claim 19, wherein the pressing portion includes a distal end portion having a contact area that is in contact with the light source and the contact area is smaller than an area of a portion of the pressing portion that overlaps the light source.

21. The lighting device according to claim 20, wherein the pressing portion is formed to be tapered such that a thickness decreases toward its distal end.

22. The lighting device according to any one of claims 19 to 21, wherein the base portion is provided so as to be on substantially a same plane with the opening edge of the opening portion.

23. The lighting device according to claim 22, wherein the base portion is formed in substantially an umbrella shape to cover the pressing portion.

24. The lighting device according to any one of claims 18 to 23, further comprising:
an outer lead extending outwardly from an end of the light source and connected to the electrode portion; and
a connector connected to the outer lead.

25. The lighting device according to claim 24, wherein:
the connector includes a terminal connector that comes in contact with the outer lead; and
an inserting and removing direction of the outer lead with respect to the terminal connector substantially matches an arrangement direction of the light source pressing portion and the light source.

26. The lighting device according to any one of claims 1 to 25, wherein the cover member has light reflectivity.

27. The lighting device according to claim 26, wherein the cover member includes an inclined portion extending toward the middle portion of the light source and inclined toward a bottom surface of the chassis.

28. The lighting device according to any one of claims 1 to 27, further comprising an optical member provided to face the light source, wherein:
the chassis includes an opening through which light exits;
the optical member is arranged to cover the opening; and
the cover member includes an optical member placing portion on which the optical member is placed.

29. The lighting device according to one of claims 1 to 28, wherein:
the light source is formed in a linear shape extending along an axis perpendicular to the extending direction of the cover member and the light source includes a plurality of light sources and the light sources are arranged in the chassis such that the axes are parallel to each other; and
the cover member collectively covers end portions of the light sources.

30. The lighting device according to one of claims 1 to 29, wherein the light source is a cold cathode tube.

31. A display device comprising:
the lighting device according to any one of claims 1 to 30; and
a display panel configured to provide display using light from the lighting device.

32. The display device according to claim 31, wherein the display panel is a liquid crystal panel using liquid crystals filled between base boards.

33. A television receiver comprising the display device according to one of claims 31 and 32.
